(19) Europäisches Patentamt
European Patent Office
Office européen des brevets

(11) **EP 4 600 873 A1**

(12) **EUROPEAN PATENT APPLICATION**

(43) Date of publication:
**13.08.2025 Bulletin 2025/33**

(21) Application number: **25157076.8**

(22) Date of filing: **11.02.2025**

(51) International Patent Classification (IPC):
**G06Q 10/047** (2023.01)     **G06Q 10/0833** (2023.01)

(52) Cooperative Patent Classification (CPC):
**G06Q 10/047; G06Q 10/0833**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.02.2024 US 202418439260**

(71) Applicant: HERE Global B.V.
**5611 ZT Eindhoven (NL)**

(72) Inventors:
• **Beaurepaire, Jerome**
  **92400 COURBEVOIE (FR)**
• **Hashisho, Basel**
  **10115 BERLIN (DE)**
• **Naik, Amol**
  **65824 Schwalbach (DE)**
• **Unger, Jens**
  **10115 BERLIN (DE)**

(74) Representative: **Sariot, Eray**
  **HERE Global BV**
  **Parnassusweg 715**
  **1077 DG Amsterdam (NL)**

(54) **METHOD AND APPARATUS FOR PROVIDING A REAL-TIME ESTIMATED TIME OF ARRIVAL SCORECARD BASED ON REAL-TIME CLASSIFICATION OF LOCATION TRACE DATA**

(57)     An approach is provided for contextualized determination of estimated times of arrival (ETAs) for trips. The approach involves, for example, computing an original ETA for a vehicle on a route that is subject to required events. The original ETA is computed based on pre-trip predicted events determined based on an initial set of trip context assumptions and the required events. The approach also involves monitoring real-time location trace data of the vehicle during a monitoring period to determine actual events of the vehicle and/or driver. The approach further involves generating a real-time ETA scorecard comparing the actual events to the required events, pre-trip predicted events, and/or prior events determined for previous monitoring periods. The approach further involves determining predicted events for subsequent monitoring periods based on the real-time ETA scorecard, and determining an updated ETA based on the predicted events.

FIG. 2

EP 4 600 873 A1

**Description**

BACKGROUND

The transportation and logistics (T&L) industry is a category of companies that provide services to transport people or goods (e.g., delivery companies). Delivering on time is essential for customer satisfaction and business efficiency. However, there are numerous technical challenges that make it difficult to provide precise estimated times of arrival (ETAs) to customers. For example, T&L companies and related location-based service providers face significant technical challenges to determine and account for various contexts that can affect the accuracy of ETAs.

SOME EXAMPLE EMBODIMENTS

Therefore, there is a need for providing a real-time estimated time of arrival (ETA) scorecard that provides contextual information affecting ETA computation, particularly in a real-time scenario.

According to one embodiment, a method comprises computing an original ETA for a vehicle (e.g., commercial vehicle) traveling on a route for a trip (e.g., a transportation and logistics (T&L) industry trip). The trip is subject to one or more required events (e.g., a rest stop) during the route, and the original ETA is computed based on one or more pre-trip predicted events that are predicted based on an initial set of assumptions and the one or more required events. The method also comprises monitoring real-time location trace data collected from one or more sensors of the commercial vehicle on the route during a monitoring period. The method further comprises processing the real-time location trace data to determine one or more actual events of the commercial vehicle, the driver, or a combination occurring during the monitoring period. The method further comprises generating a real-time ETA scorecard that compares the one or more actual events to the one or more required events, the one or more pre-trip predicted events, one or more prior events determined for one or more previous monitoring periods, or a combination thereof. The method further comprises determining one or more predicted events for one or more subsequent monitoring periods based on the real-time ETA scorecard. The method further comprises determining an updated ETA for the route based on the one or more predicted events. The method further comprises providing the updated ETA, the real-time ETA scorecard, or a combination thereof as an output.

According to another embodiment, an apparatus comprises at least one processor, and at least one memory including computer program code for one or more computer programs, the at least one memory and the computer program code configured to, with the at least one processor, cause, at least in part, the apparatus to compute an original ETA for a vehicle (e.g., commercial vehicle) traveling on a route for a trip (e.g., a transportation and logistics (T&L) industry trip). The trip is subject to one or more required events (e.g., a rest stop) during the route, and the original ETA is computed based on one or more pre-trip predicted events that are predicted based on an initial set of assumptions and the one or more required events. The apparatus is also caused to monitor real-time location trace data collected from one or more sensors of the commercial vehicle on the route during a monitoring period. The apparatus is further caused to process the real-time location trace data to determine one or more actual events of the commercial vehicle, the driver, or a combination occurring during the monitoring period. The apparatus is further caused to generate a real-time ETA scorecard that compares the one or more actual events to the one or more required events, the one or more pre-trip predicted events, one or more prior events determined for one or more previous monitoring periods, or a combination thereof. The apparatus is further caused to determine one or more predicted events for one or more subsequent monitoring periods based on the real-time ETA scorecard. The apparatus is further caused to determine an updated ETA for the route based on the one or more predicted events. The apparatus is further caused to provide the updated ETA, the real-time ETA scorecard, or a combination thereof as an output.

According to another embodiment, a non-transitory computer-readable storage medium carries one or more sequences of one or more instructions which, when executed by one or more processors, cause, at least in part, an apparatus to compute an original ETA for a vehicle (e.g., commercial vehicle) traveling on a route for a trip (e.g., a transportation and logistics (T&L) industry trip). The trip is subject to one or more required events (e.g., a rest stop) during the route, and the original ETA is computed based on one or more pre-trip predicted events that are predicted based on an initial set of assumptions and the one or more required events. The apparatus is also caused to monitor real-time location trace data collected from one or more sensors of the commercial vehicle on the route during a monitoring period. The apparatus is further caused to process the real-time location trace data to determine one or more actual events of the commercial vehicle, the driver, or a combination occurring during the monitoring period. The apparatus is further caused to generate a real-time ETA scorecard that compares the one or more actual events to the one or more required events, the one or more pre-trip predicted events, one or more prior events determined for one or more previous monitoring periods, or a combination thereof. The apparatus is further caused to determine one or more predicted events for one or more subsequent monitoring periods based on the real-time ETA scorecard. The apparatus is further caused to determine an updated ETA for the route based on the one or more predicted events. The apparatus is further caused to provide the updated ETA, the real-time ETA scorecard, or a combination thereof as an output.

According to another embodiment, an apparatus comprises means for computing an original ETA for a vehicle (e.g., commercial vehicle) traveling on a route for a trip (e.g., a transportation and logistics (T&L) industry trip). The trip is subject to one or more required events (e.g., a rest stop) during the route, and the original ETA is computed based on one or more pre-trip predicted events that are predicted based on an initial set of assumptions and the one or more required events. The apparatus also comprises means for monitoring real-time location trace data collected from one or more sensors of the commercial vehicle on the route during a monitoring period. The apparatus further comprises means for processing the real-time location trace data to determine one or more actual events of the commercial vehicle, the driver, or a combination occurring during the monitoring period. The apparatus further comprises means for generating a real-time ETA scorecard that compares the one or more actual events to the one or more required events, the one or more pre-trip predicted events, one or more prior events determined for one or more previous monitoring periods, or a combination thereof. The apparatus further comprises means for determining one or more predicted events for one or more subsequent monitoring periods based on the real-time ETA scorecard. The apparatus further comprises means for determining an updated ETA for the route based on the one or more predicted events. The method further comprises providing the updated ETA, the real-time ETA scorecard, or a combination thereof as an output.

In addition, for various example embodiments described herein, the following is applicable: a computer program product may be provided. For example, a computer program product comprising instructions which, when the program is executed by a computer, cause the computer to perform any one or any combination of methods (or processes) disclosed.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The embodiments of the invention are illustrated by way of example, and not by way of limitation, in the figures of the accompanying drawings:

FIG. 1 is a diagram of a system capable of providing an estimated time of arrival (ETA) scorecard from vehicle location trace data, according to one example embodiment;

FIG. 2 is a diagram of an ETA service capable of providing an ETA scorecard, according to one example embodiment;

FIG. 3 is a representation of an example ETA scorecard, according to example embodiment;

FIG. 4 is a diagram of processes associated with an ETA service, according to one example embodiment;

FIG. 5 is a flowchart of a process for providing an ETA scorecard from vehicle location trace data, according to one example embodiment;

FIG. 6A is a diagram illustrating an example reference context 601, according to one example embodiment;

FIG. 6B is a diagram illustrating an example current context 621, according to one example embodiment;

FIG. 6C is a diagram illustrating example calculations for determining task, drive, and rest duration deviations, according to one example embodiment;

FIG. 6D is a diagram illustrating an example calculation for determining drive duration deviations, according to one example embodiment;

FIG. 7 illustrates an ETA scorecard for an example scenario in which a driver was not fully rested when starting the trip, according to one example embodiment;

FIG. 8 is a diagram of a geographic database, according to one example embodiment;

FIG. 9 is a diagram of hardware that can be used to implement an example embodiment of the processes described herein;

FIG. 10 is a diagram of a chip set that can be used to implement an example embodiment of the processes described herein; and

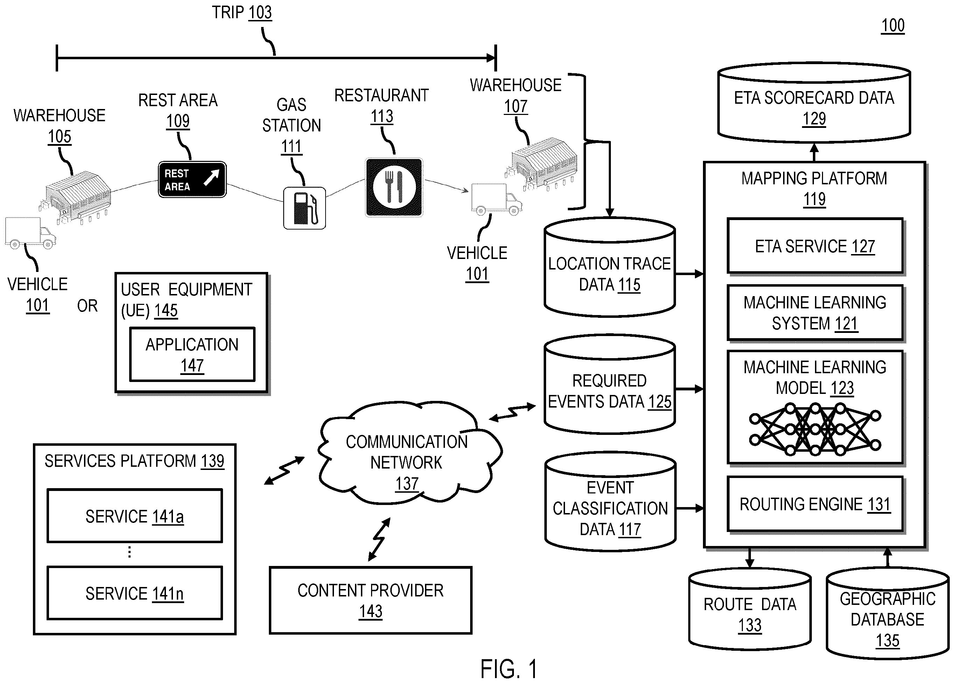

FIG. 1 is a diagram of a terminal that can be used to implement an example embodiment of the processes described herein.

DESCRIPTION OF SOME EMBODIMENTS

Examples of a method, apparatus, and computer program for providing a real-time estimated time of arrival (ETA) scorecard based on real-time classification of vehicle location trace data are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such, "one embodiment" can also be used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

FIG. 1 is a diagram of a system 100 capable of providing an estimated time of arrival (ETA) scorecard from vehicle location trace data, according to one example embodiment. Transport and logistics companies frequently face uncertainties and discrepancies in their delivery schedules. ETAs along the journey are subject to change but customers are requesting greater clarity regarding the causes of these abrupt adjustments. Without a clear understanding on the reasons why an ETA is varying, customers are unable to accurately gauge the risk associated with the arrival times of shipments, thereby affecting their ability to make informed logistical decisions. Providing accurate navigation and/or mapping services (e.g., accurate ETA is important for many fleet management and logistical operations such as within the transportation and logistics (T&L) industry). By way of example, logistical operations often involve a vehicle 101 (e.g., commercial vehicles such as but not limited to trucks and/or any other equivalent types of vehicles) that is capable of transporting people/-goods/products, making deliveries, and/or the like.

Transport and logistics companies frequently face uncertainties and discrepancies in their delivery schedules. ETAs along the journey are subject to change but customers are requesting greater clarity regarding the causes of these abrupt adjustments. Without a clear understanding on the reasons why an ETA is varying, customers are unable to accurately gauge the risk associated with the arrival times of shipments, thereby affecting their ability to make informed logistical decisions.

More specifically, understanding the reasons for truck delays in real-time is important for customers in the T&L industry for several reasons:

1. Enhanced Operational Efficiency: Knowing the specific reasons for delays allows for more accurate and dynamic planning. If a company knows a truck is delayed due to traffic, they can adjust schedules or routes for other trucks to avoid similar issues. This leads to more efficient use of resources and time.

2. Improved Customer Service: Providing customers with real-time information about their deliveries, including reasons for delays, can significantly enhance customer satisfaction. It shows transparency and allows customers to plan accordingly, reducing frustration caused by uncertainty.

3. Data-Driven Decision Making: Real-time delay information feeds into a larger data set that helps in identifying patterns and problem areas. This can lead to strategic decisions, like altering regular routes, changing delivery schedules, or even influencing future fleet purchases based on the types of issues most commonly encountered.

4. Cost Management: Delays often translate to increased costs due to longer driver hours, higher fuel consumption, and potential overtime payments. Understanding the causes of delays helps in identifying areas where costs can be reduced, leading to more efficient budgeting.

5. Regulatory Compliance: In many regions, truck drivers are subject to strict regulations regarding driving hours and mandatory breaks. Real-time delay data can help ensure compliance with these regulations, reducing the risk of penalties and ensuring driver safety.

6. Proactive Problem Solving: Knowing the cause of delays in real-time allows logistics managers to address issues proactively. For instance, if a delay is due to a road blockage, alternate routes can be immediately provided to the driver or to other drivers coming later, minimizing the delay.

7. Enhanced Safety: Understanding real-time causes of delays can also highlight safety concerns. For example, if delays are frequently caused by poor road conditions, this information can be used to advocate for safer roads or better vehicle maintenance.

8. Competitive Advantage: In a highly competitive industry, the ability to efficiently manage logistics and provide transparent communication can be a significant differentiator for a company. It can lead to stronger customer loyalty and a better reputation in the market.

9. Inventory Management: For businesses relying on just-in-time inventory, understanding truck delays in real-time is crucial. It allows them to adjust inventory levels and manufacturing schedules to avoid overstocking or running out of essential materials.

10. Environmental Impact: Understanding the reasons for delays can also help in reducing the environmental impact of logistics operations. Efficient route planning and reduced idle time can lead to lower emissions. In essence, real-time insights into truck delays not only improve operational efficiency but also enhance customer satisfaction, enable cost-effective decisions, ensure compliance with regulations, and offer a competitive edge in the market.

Accordingly, location-based service providers (e.g., mapping and navigation service providers) face significant challenges to providing technical solutions for answering questions such as but not limited to: "How could we provide richer information to our customers which need precise ETAs for their truck deliveries?" and "Which additional contextual information could we provide them with, when a shipment is being delayed?" These problems related to providing accurate ETAs and associated contexts are particularly challenging in the T&L industry where its drivers are subject to regulated hours of service (HOS) breaks (e.g., required rest stops) and/or other limits on their driving hours, distance, and/or the like.

To address these technical challenges, the system 100 of FIG. 1 introduces a capability to analyze a logistical or T&L trip and one or more contexts of the trip and provide additional information with every ETA update (e.g., contextual information on why the ETA has been updated). By having this information, T&L companies can adapt accordingly. More specifically, the various embodiments of the system 100 described herein enables T&L companies (e.g., shipping companies) to benefit from more advanced shipment related information for their decision making by computing a real time ETA scorecard with contextual classification of events leading to truck or other commercial vehicle related ETA delays.

In one embodiment, the ETA scorecard feature is updated in real-time and will provide additional context to an ETA response by highlighting what has changed since the last ETA update and therefore provide customers with an explanation associated with a change in ETA. By way of example, the ETA scorecard (e.g., as output from the system 100) can be used for applications such as but not limited to: (1) to compute/evaluate risks based on ETA and such parameters; and (2) to determine more insights on how the trip is proceeding, for evaluating the "health" of a given trip (e.g., a trip might appear on time but driver might have some "rest time debt" to take before reaching the destination); and (3) for analytics and leg performance measurements. Furthermore, there are multiple objectives for this feature, such as but not limited to: (1) Higher level of transparency related to ETA calculation; and (2) build more confidence in the computed ETA by providing the reasons for deviations. In yet another embodiment, the ETA scorecard can be used to trigger more data driven discussions with customers when an ETA is not perceived as "accurate enough" by providing the list of assumptions made at the beginning of the trip, which are monitored during that trip to identify possible deviations.

In one embodiment, the monitoring is based on trip data (e.g., T&L trip data) where each trip 103 is based on a route comprising a sequence of events such as driving events (e.g., when the vehicle 101 is driving on the route), task events (e.g., when the vehicle 101 and/or driver is performing a task related to the trip such as loading/unloading the vehicle 101), stop events (e.g., rest stops, fuel stops, etc.), and/or any other event related to the trip 103. In the example of FIG. 1, the trip 103 starts with a task stop (e.g., loading from a warehouse 105) and ends with another task stop (e.g.,

unloading to another warehouse 107). A logistical or commercial vehicle 101 (e.g., truck) may perform multiple rest stops in between the two task stops (e.g., at warehouses 105 and 107) for the purpose of resting (e.g., at rest stop or area 109), refueling (e.g., at gas station 111), eating (e.g., at restaurant 113), and/or sleeping (not shown).

In one embodiment, trip data (e.g., start, destination, events along the trip 103, etc.) can be recorded by manual logging (e.g., by the driver, dispatcher, etc.). In addition or alternatively, the widespread usage of Global Positioning System (GPS) (and any other Global Navigation Satellite System (GNSS) type positioning systems) nowadays makes it an attractive source of trip data. However, utilizing this source requires extracting trip and/or event data from the raw GPS or other position data such as location trace data 115. In one embodiment, location trace data 115 comprises sequences of periodically sampled geolocations as vehicles 101 travel. For example, each sampled geolocation can include a latitude, longitude, and/or altitude of the vehicle 101 with or without a timestamp corresponding to the sampled time. In addition, each sampled geolocation may be provided with or withing a vehicle or probe identifier corresponding to the vehicle 101. In one embodiment, the location trace data 115 can be sampled using one or more positioning sensors or devices associated with the vehicle 101 and/or associated with a user equipment (UE) device 145 (e.g., personal navigation device, smartphone, portable terminal, tablet, etc.) associated with the vehicle 101 and executing an application 147. Based on the number of vehicles 101 in a monitored fleet, the number of data points in the location trace 115 can reach a volume that makes it impractical for manual processing to be completed within real-time requirements. In this context, extracting trip or event data can be translated into the problem of detecting and classifying stops from location trace data 115 (e.g., GPS traces). Once the system 100 determines where vehicle events occur and what the reason for the event is (e.g., task stop/event versus rest stop/event), the system 100 can construct or extract event classification data 117 (e.g., a sequence of events occurring during the trip 103) from the location trace data 115.

It is contemplated that the system 100 can use any means for detecting and classifying events or stops along the trip 103. In one embodiment, the system 100 (e.g., via a mapping platform 119 alone or in combination with a machine learning system 121 and trained machine learning model(s) 123) can detect an event/stop by identifying a sequence of GPS points of the location trace data 115 for a given vehicle 101 of interest that are stationary or move very slowly in a small radius (e.g., move below a speed threshold within a threshold distance radius or boundary). The system 100 can then identify the purpose of an event/stop and perform event/stop classification. For example, the system 100 can use a "route-detour" (or any other equivalent process) to facilitate classifying events/stops into task events/stops and rest events/stops (e.g., generation of event classification data 117). As described above, each trip 103 represents a movement of a vehicle 101 (e.g., truck or other logistical vehicle) from a task place (e.g., a cargo station) to another task place, possibly with multiple events/stops in between for non-task purposes (e.g., resting, eating, refueling, etc.). An event/stop at a task place, for instance, is referred to as a "task event/stop" and an event/stop for non-task purposes is referred to as a "rest event/stop." A task place, for instance, refers to location where the vehicle 101 is to perform a task designated to the vehicle 101 (e.g., make a delivery, pick up goods for transport, etc.).

In commercial or T&L scenarios, rest events or stops often are dictated by laws or regulation regarding through regulated HOS. For example, under current European Union (EU) regulations, regulated HOS for commercial drivers are as follows:

- Daily driving limit: 9 hours (can be extended to 10 hours twice a week).
- Weekly driving limit: 56 hours (maximum 90 hours per two weeks).
- Breaks: At least 45 minutes for every 4 hours and 30 minutes of driving time.
- Daily rest: 11 hours of rest for every 24 hours of service, which may be split into two rest periods (of first 3 and then 9 hours for a total of 12 hours), or a reduced period of 9 hours at most 3 times between any two weekly rest periods.
- Weekly rest: 45 continuous hours of rest after 6 days of driving, and at least 24 hours every second week.

Similarly, under United States (US) regulations, regulated HOS for commercial drivers are as follows:

- Daily driving limit: 11 hours after 10 consecutive hours off duty.
- On-duty limit: May not drive beyond the 14th consecutive hour after coming on duty, following 10 consecutive hours off duty.
- Breaks: Drivers must take a 30-minute break when they have driven for a period of 8 cumulative hours without at least a 30-minute interruption.
- Weekly driving limit: May not drive after 60/70 hours on duty in 7/8 consecutive days. A driver may restart a 7/8 consecutive day period after taking 34 or more consecutive hours off duty.

In one embodiment, the events dictated by the regulation can be stored as required events data 125 and can be used to compute or predict when such required events are expected to occur on the trip 103 or route. The required events data 125, for instance, can be determined based on the applicable regulations for a given routing area.

In one embodiment, the system 100 can use the event classification data 117 extracted from the location trace data 115 and/or the required events data 125 to build and evaluate an ML-based ETA and ETA scorecard prediction model 123 (e.g., computed by an ETA service 127 to generate ETA scorecard data 129) and/or to provide any other location-based services. In one embodiment, the ETA scorecard data 129 (e.g., generated in real-time or substantially real-time as real-time location trace data 115 is collected) can provide an explanation for why an ETA estimate (current estimate) deviates from previous ETA estimate (e.g., a reference or original ETA). In one embodiment, this is done by reporting the differences between a set of predicted parameters at reference/original ETA calculation time versus actual events/actions performed by the vehicle 101 and/or driver up until the ETA calculation time (or other designated monitoring period). In yet another embodiment, the ETA scorecard data 129 can be provided to the routing engine 131 to compute a new or updated route (e.g., route data 133) for the trip 103 where the route comprises a sequence of driving and non-driving events (e.g., rest events, task events, etc.) between a start location and a destination based on map data of a geographic database 135. The route data 133 can include the updated ETA to reach the final destination.

In one embodiment, the mapping platform 119 can provide the ETA scorecard data 129, route data 133, event classification data 117, and/or any other related data over a communication network 137 to a services platform 139, one or more services 141a-141n (also collectively referred to as services 141) of the services platform 139, one or more content providers 143, and/or any other component with connectivity to the system 100 to use the output of the system 100 and/or provide information/data for generating the output.

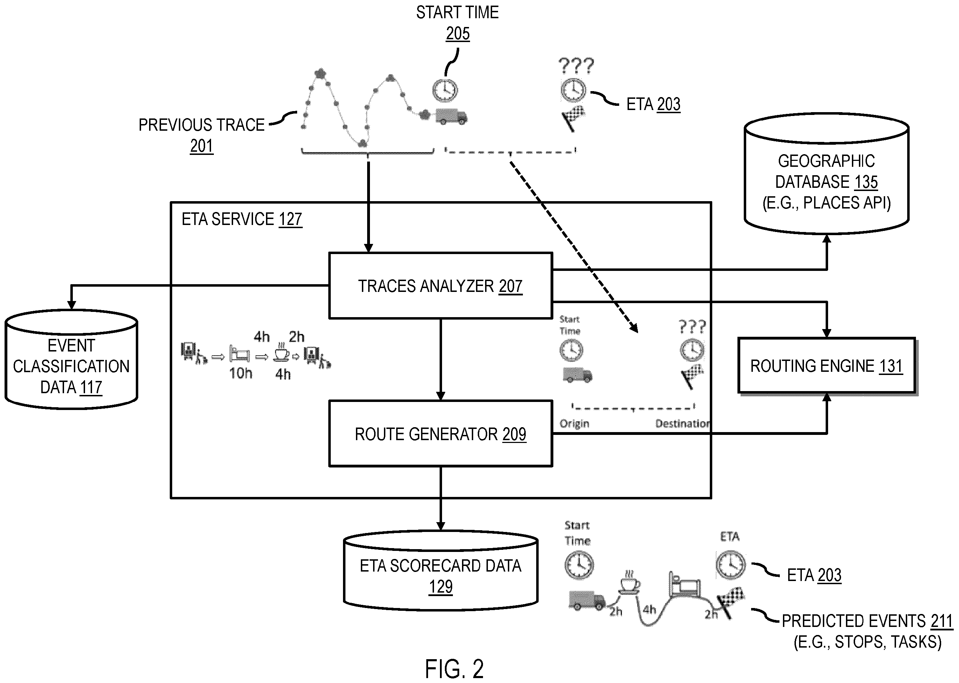

FIG. 2 is a diagram of an ETA service 127 capable of providing an ETA scorecard (e.g., ETA scorecard data 129), according to one example embodiment. In one embodiment, the various embodiments described herein rely on a set of initial assumptions made around the context of a trip 103. These trips 103 are of a commercial/logistic nature, e.g., truck trips or T&L industry tripes. In one embodiment, a separation of before, during, and after trip is used to: (1) generate the assumptions before the trip 103, (2) validate the assumptions during or after the trip 103, (3) create the ETA scorecard during or after the trip 103, and (4) perform a post trip analysis after the trip 103.

In one embodiment, the context at the beginning of the trip includes what the system 100 knows (e.g., 1. start, 2. destination, 3. start time, and 4. location traces from previous trips by the same driver or vehicle 101 when applicable), and what the system 100 does not know (e.g., 1. the allocated slots at the destination or delivery location, and 2. opening hours of the destination of delivery location such as but not limited to a warehouse, shop, business, etc.). In addition, the system 100 is configured with the following initial assumptions when calculating a reference or original ETA:

- 1. Drivers are fully rested before the trip begins (unless detected otherwise from sufficient past traces).
- 2. There is only one driver for the whole trip.
- 3. Drivers follow appropriate transportation regulations and are law abiding (e.g., In term of resting times and evening/weekend driving bans).
- 4. Only full truckload (FTL) shipments without any planned stops between pickup and drop-off (e.g., driver will go directly to the destination with no extra stopover or dwell times).
- 5. There are no fueling breaks.
- 6. A truck profile (e.g., heavy commercial vehicles weighing up to 40 tons) is used for generating routes and ETAs. For example, the truck profile has speed profiles, road selections, etc. configured for heavy commercial vehicles.
- 7. Drivers are taking optimal routes (meaning shortest time), not optimizing for toll cost, fuel price, or other parameters.
- 8. The driver has no hidden agenda, e.g., no detours, no personal breaks to visit friends/family, etc.

The initial assumptions are used by thesystem 100 to determine the initial parameters for calculating a reference ETA. For example, assumption 1 that the driver is fully rested can be used to determine when regulated HOS breaks need to be taken during the trip in question. When and how long these breaks occur can significantly affect the ETA. Similarly, assumption 2 that there is only one driver means that the reference ETA is calculated based on the rest stops, driving times, etc. that would be required when having only one driver. In other words, the system 100 can use each assumption to configure parameters for the routing engine 131 to determine a route and sequence of events (e.g., task stops, rest stops, etc.) along the route to compute an ETA for the trip. However, these initial assumptions may not always reflect reality. In this case, the system 100 uses detected actual events (e.g., events extracted from monitored location trace data 115) to determine an ETA scorecard that compares the actual events to the events predicted based on the initial assumptions to update the ETA calculation and/or provide context for why the reference or original ETA may not have met target accuracy. For example, the ETA scorecard can then refine the prediction of upcoming events/stops to improve or update the calculated ETA for the route.

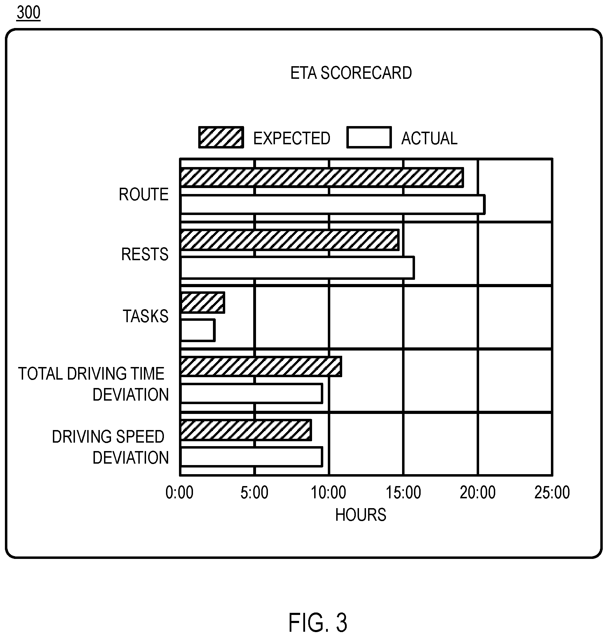

FIG. 3 is a representation of an example ETA scorecard 300, according to example embodiment. In the example of FIG. 3, a driver has completed a T&L trip using a commercial truck. The trip was completed over multiple days making the task of estimating an accurate ETA difficult because of the uncertainty of intervening events or stops that may occur during the trip. Accordingly, the ETA scorecard 300 is generated to provide contextual information for any discrepancies between an originally calculated ETA and the actual ETA. As shown, the ETA scorecard 300 provides a comparison between "expected" and "actual" ETA-related parameters during the trip. "Expected" parameters are related to events/stops that were predicted to occur before starting the trip or a leg of the trip since the last ETA update, and the "actual" parameters relate to the corresponding parameters extracted and classified from observed location traces of the vehicle as it drives along the trip of leg of the trip to which the original or reference ETA applies. As shown, the parameters of the ETA scorecard 300 include: (1) expected and actual time spent driving on the entire route ("Route") computed for the trip - this can be based on either time or distance; (2) expected and actual time spent resting during the trip ("Rests"); (3) expected and actual time spent performing trip related tasks such as but not limited to loading/unloading/making deliveries/etc. ("Tasks"); (4) expected and actual time spent driving to complete the route ("Total Driving Time Deviation"); and (5) expected and actual time spent driving below a threshold speed such as when driving on congested roads ("Driving Speed Deviation"). In this example, the actual Route time is greater than the Expected route time, which means that the trip took longer than expected and the original ETA. Then, the other parameters in the ETA scorecard 300 can give context for why the original ETA was not accurate. For example, the actual time spent resting was more than the expected rest time and the actual time spent driving in slow traffic was more than expected. It is noted that parameter illustrated in the ETA scorecard 300 are provided by way of illustration and not as limitations, and it is contemplated the ETA scorecard 300 any trip and ETA related parameters can be used for comparing expected and actual events of a T&L trip including one or more of the parameters illustrated in FIG. 3 and/or one or more other trip and/or ETA related parameters not shown in FIG. 3.

Returning to FIG. 2, in one embodiment, previous trips made by the same driver (e.g., previous trace 201 representing historical location trace data 115 for the driver) are available for analysis and ETA calculation. This previous trace 201 enables fine-tuning of the assumptions (e.g., driver truly rested?) used by the ETA service 127 to calculate the ETA 203 for a current trip based on a known start time 205 of the trip. The analysis, for instance, includes performing event or stop classification on the location trace data 115 collected from the vehicle 101 during a trip 103 of interest. As previously noted, it is contemplated that any means can be used to perform the event classification including but not limited to manual logging of trips and/or automated classification of location trace data 115.

As shown in FIG. 2, in one embodiment, the ETA service 127 includes a traces analyzer 207 configured to process the previous trace 201 associated with a driver to extract and classify trip-related events/stops into event classification data 117 to give context to further refine the initial assumptions. In one embodiment, the trace analyzer 207 processes previous location traces and/or trip logs associated with a driver using data analytics and/or machine learning to extract semantic information (e.g., trip-related events and stops) about events or stops occurring during the trip. For example, the traces analyzer 207 interprets raw location data generated during a driver's trips along with map or places data (e.g., via a places application programming interface (API) to the geographic database 135) to provide location context. The analyzer first collects location traces (e.g., previous trace 201), which are location (e.g., GPS) data points recording the driver's geographical location at different times during a trip. These location traces are then processed to extract information such as when and where the vehicle was started and stopped, the route taken by the driver, and the duration of the stop, task, and/or trip. The trace analyzer 207 identifies events/stops and their durations made by the driver along the monitored navigation route. These stops could be categorized as fuel stops, rest stops, traffic stops, or destination stops. Additional details regarding various embodiments of event classification are provided further below. The event classification data 117 for the previous trace 201 can be used to determine initial assumptions about the driver and/or vehicle before the start of a trip.

In one embodiment, the traces analyzer 207 can interact with the routing engine 131 to determine routes between stops for use by a route deviation algorithm or other means for determining differences between expected and actual routes taken during a monitored trip. It is contemplated that the routing engine 131 can be based on any known process for generating navigation routes between two locations. The technical implementation of the routing engine 131 can involve several components and algorithms. For example, the routing engine 131 can use a comprehensive map database (e.g., the geographic database 135) that contains map data about roads, intersections, landmarks, and other relevant geographical features. This database is often created using data from satellites, GPS devices, and mapping surveys. The routing engine 131 can use a routing algorithm, typically based on graph theory. For example, the geographic database 135 can represent the road network is represented in a link-node representation as a graph, where intersections are nodes, and roads are links or edges connecting these nodes. The routing engine 131 can employ algorithms such as but not limited to Dijkstra's or A* to calculate the shortest or fastest path between two locations based on specified criteria, such as distance or travel time. The routing engine 131 can also integrate dynamic information like the event classification data 117, traffic conditions, road closures, accidents, and/or the like. Machine learning models may be incorporated to predict events/stops, traffic patterns, and/or optimize routes dynamically. Additionally, the routing engine 131 can consider other constraints, allowing for customization based on factors like vehicle type (e.g., using a truck profile to compute routes optimized for the speeds, size, and/or other characteristics or preferences tailored to commercial vehicles of a designated sizes.

Accordingly, in one embodiment, the ETA service 127 can include a route generator 209 for interacting with the routing engine 131 for computing routes and updating routes from the last vehicle location at which the previous or original ETA was computed. For example, under the initial assumptions (optionally modified based on the event classification data 117 extracted from a previous trace 201), the route generator 209 can request a truck route to an API of the routing engine 131, including all the constraints derived from the above assumptions and required events data 125 (e.g., implementing regulated HOS breaks or other regulatory requirements for commercial trucking). In response, the route is received including the allotted resting and task time (e.g., pre-trip predicted events 211) and associated original/reference ETA 203, enabling the creation of a template ETA scorecard (e.g., ETA scorecard data 129). This initial route data can be computed before a trip or leg of the trip and used to set the expected parameters for the upcoming trip or leg in the ETA scorecard.

In one embodiment, after the ETA scorecard is created before a trip, context during the trip can be monitored to validate the initial assumptions and update the actual events to compare against predicted events in the ETA scorecard. For example, the traces analyzer 207 can be further analyze the trip data (e.g., location trace 115) incoming in (near-)Real-Time from the vehicle 101. Events on the ongoing trip are classified (driving, rest, task, etc.), which allows for validation of the assumptions.

The ETA service 127 automatically (e.g., without manual input) contextualizes the trip within past and current events detected from the previous trace 201, location trace data 115, and/or the like. Once the events of the ongoing trip are understood, an updated sequence of expected tasks, rest and driving time (e.g., predicted events 211) is generated and a request for an updated route is sent to the routing engine 131 via the route generator (e.g., through a routing API).

In one embodiment, during the trip, the ETA service 127 can update the ETA 203 iteratively, taking into account actual events in the ongoing trip as they are detected from the location trace data 115. The ETA service 127 effectively corrects previous mistaken assumptions, traffic situation, and unforeseen circumstances along the trip. In addition, the ETA scorecard data 129 can be updated in real-time, validating the assumptions made before starting the trip and providing detailed metrics about the different events on the trip, with an up-to-date comparison between planned/optimal trip and actual trip.

In one embodiment, the ETA service 127 can be used to evaluate the context after a trip is completed to look back and analyze what happened during the trip. After a trip has been completed, a full analysis using the ETA service 127 can be performed to assess the full trip, providing an overview of the events enroute (e.g., spatial deviations/detours, temporal deviations, deviations from required stops, etc.) and a complete performance comparison with the ETA scorecard. For example, using the ETA scorecard and associated detected events on the trip, a much richer breakdown of a route can be obtained, not limited to only an updated ETA. The ETA scorecard data 129 can then be used evaluate trip performance and ETA accuracy including but not limited to the following: (1) determination of the key factors or parameters (e.g., key performance indicators (KPIs)) contributing to ETA deviation, (2) initial computation of expected values for the key factors or parameters in the ETA scorecard, and (3) computation of compliance index to the original plan. In one embodiment, the compliance index can be a basic index computed based on the absolute ETA deviation. In addition or alternatively, the compliance index can be based on differences between the expected and actual values of any KPI or parameter tracked in the ETA scorecard.

In one embodiment, the ETA scorecard data 129 or compliance index derived from the ETA scorecard data 129 can be used to under various scenarios. For example, the ETA scorecard data 129 can be presented for self-compensation of KPIs (e.g., when a driver takes extra rest and then drives faster to compensate for the time when stopped for the extra rest). In scenarios without self-compensation, the ETA service 127 can be used to make sure that correct ETAs are not left to "chance" (e.g., that unanticipated events will not affect an ETA). In this case, the ETA service 127 can be used to avoid instances where some of the KPIs are cancelling each other and leading to a smaller deviation, which is why the ETA service 127 can also compute a compliance index without self-compensation of KPIs. This is the index computed based on the ETA/route deviation considering as well as based on the internal KPI deviation (e.g., deviations of individual parameters or KPIs tracked on the ETA scorecard), in order to capture what is really happening and determine compliance with each individual parameter or KPI contributing to accuracy of the original ETA. For example, a driver might have a good ETA/route compliance by delivering on time but a very bad KPI related compliance if some of those KPIs have been compensated against other ones (e.g., skipping required rest stops to compensate for other unscheduled stops).

As other examples, the ETA service 127 can perform computation of a compliance index to the rest regulation (e.g., duration only of regulate HOS rest breaks and/or driving hour limits), thereby comparing the planned rest stop duration at the beginning of the trip with the actual or taken rest stops. In one embodiment, monitoring of the actual KPIs of the ETA scorecard is performed in real-time (e.g., as real-time location trace data 115 is collected by the ETA service 127) and the related deviations during the entire trip (e.g., deviations between the expected and expected parameters of the ETA scorecard). In one embodiment, KPIs are updated at every ETA calculation request (or based on the rules or schedules previously defined) in order to determine "on-spot" deviations as they occur in real-time (e.g., which are early signs of deviations according to the originally or previously computed ETA, route, and pre-trip predicted events/stops).

In other words, the mapping platform 119 can compute a compliance index based on an ETA deviation between the original ETA and the updated ETA, a regulatory deviation between the one or more required events and the one or more actual events, or a combination thereof. The mapping platform 119 can also transmit an alert based on the ETA deviation, the regulatory deviation, or a combination thereof.

In one embodiment, the ETA service 127 can communicate (e.g., transmit alerts or other messages) the deviations as part of the ETA response, optionally before the trip or during an ongoing trip (e.g., when a user asks for deviations or ETA updates after 2 hours of driving or some other time, period, or frequency for updating the ETA). In one example scenario, the user requesting the ETA updates can be a Fleet Manager of a T&L company, but the information could also be provided to a driver, end-customer, etc.

In one embodiment, ETA deviations are computable/possible against: (1) a first computed, original, and/or reference ETA, (2) a log scale ETA or other scale, (3) a smart auto-reference detection (e.g., based on recognized events or patterns of events during the trip), and/or (4) all or a subset of pings corresponding to each collected data point of defined set of data points of the location trace data 115.

In one embodiment, a user could subscribe to the ETA service 127 to get the ETA scorecard data 129 (e.g., as part of an API response), before the trip. Also, the user could subscribe to the ETA service 127 to get the ETA scorecard data 129 (e.g., as part of the API response), during the trip, based on a manual trigger/event, in case the user needs to inquire more about a specific shipment. In addition, further insights of why deviations happen could be derived, e.g., using ML learning (e.g., via the ML system 121 and ML model(s) 123), taking into account: (1) where ETA deviations start happening (e.g., with or without self-compensation); (2) relationships between map feature (e.g., point of interest, landscape, terrain, etc.) and deviations; (3) main causes for deviations (e.g., statistically learned from the above trips for one driver, for multiple drivers, for a fleet, within a geographic region, seasonal, and/or any other contextual parameter); (4) relationships between compliance indexes; etc.

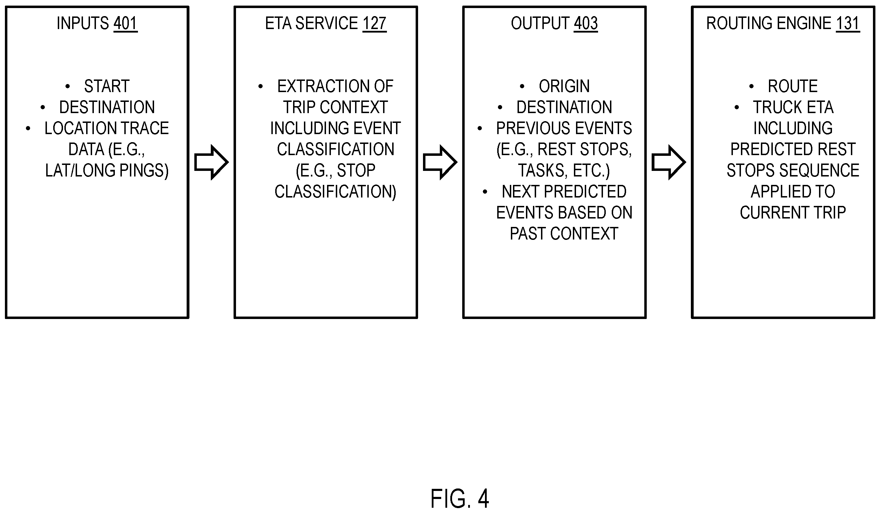

FIG. 4 is a diagram summarizing the processes associated with an ETA service 127, according to one example embodiment. The processes begin with a set of inputs 401 comprising initial parameters for computing a route and ETA according to various embodiments described herein. For example, inputs 401 include but are not limited to: (1) a start location (i.e., origin) of the trip; (2) a destination of the trip; and (3) optionally location trace data from previous trips by the same driver (e.g., previous trace 201). The inputs 401 are then provided to the ETA service 127 (e.g., via an ETA request through an API or equivalent). The ETA service 127 processes previous trace 201 to extract trip context including event classification data 117 (e.g., rest stops, tasks, refueling, etc. occurring on the previous trip). The ETA service 127 then generates outputs 403 comprising parameters for determining a route and associated events for the trip. The outputs 403 include but are not limited to: (1) origin of the trip; (2) destination of the trip; (3) previous events (e.g., rest stops, tasks, etc.) extracted from the previous trace 201; and (4) next predicted events based on the past context and required events (e.g., regulated HOS breaks). The outputs 403 of the ETA service 127 are provided to the routing engine 131 to compute: (1) a route between the origin and destination based on the past contexts and initial assumptions of the trip; and (2) a truck or commercial vehicle ETA including a sequence of predicted events that are applied to the current trip as discussed in the various embodiments described herein. This route comprising the sequence of predicted events determined before the trip can then be used as the expected values of the KPIs or parameters of the ETA scorecard.

In one embodiment, the mapping platform 119 of the system 100 (e.g., via the ETA service 127) performs one or more functions for extracting journeys from vehicle location trace data 115 for generating contextual ETA information according to the various embodiments described herein. It is contemplated that the functions of the components of the mapping platform 119 and/or ETA service 127 may be combined or performed by other components of equivalent functionality. As shown in FIG. 1, in one embodiment, the mapping platform 119 includes the ETA service 127, machine learning system 121, machine learning models 123, and routing engine 131 configured to perform the various embodiments described herein. In addition, as shown in FIG. 2, the ETA service 127 comprises a traces analyzer 207 and route generator 209 to perform the various embodiments described herein alone or in combination with the components or the mapping platform 119 and/or system 100.

The above presented modules and components of the mapping platform 119 and/or ETA service 127 can be implemented in hardware, firmware, software, circuitry, or a combination thereof. Though depicted as separate entities in FIGs. 1 and 2, it is contemplated that the mapping platform 119 may be implemented as a module of any of the components of the system (e.g., services platform 139, services 141, content providers 143, vehicles 101, user equipment devices (UEs) 145, applications 147 executing on the UEs 145, and/or the like). In another embodiment, one or more of the modules or components of the mapping platform 119 and/or ETA service 127 may be implemented as a cloud-based service, local service, native application, or combination thereof.

The functions of the mapping platform 119, ETA service 127, and/or their modules/components are discussed with respect to figures below. The denotations and terms used in the description of the various embodiments include:

**Definition 1:** A *GPS or location trace T* is a sequence $<(x_1, y_1, t_1), (x_2, y_2, t_2),...(x_n, y_n, t_n)>$ where $t_1 < t_2 < ... < t_n$, indicating that a truck is at geolocation $(x_1, y_1)$ at time $t_1$, at geolocation $(x_2, y_2)$ at time $t_2$, and so on. Each point $(x_i, y_i, t_i)$ is called a *GPS or location point* and denoted $p_i$.

**Definition 2:** Denote by $d_i$ the great circle distance between geolocations $(x_i, y_i)$ and $(x_{i-1}, y_{i-1})$. The *speed* of a GPS point $(x_i, y_i, t_i)$, denoted $v_i$, is equal to $\dfrac{d_i}{t_i - t_{i-1}}$.

**Definition 3:** A *real stop or event* is an uninterrupted time period during which a truck is stationary. The start (or end) point of this time period is called the *arrival* (or *departure*) time of this real stop.

Due to random GPS errors, the GPS points sampled during a real stop vary slightly and therefore the derived speed is seldom zero. Instead, the truck usually appears to move very slowly within a small spatial range. Thus, we have the following definition to capture a real stop indicated in a GPS trace.

**Definition 4:** A *trace-stop or event* is a longest consecutive subsequence of $T$ such that the speed of each GPS or location point in the trace-stop is lower than a threshold $v_{low}$ and the total distance traveled in the trace-stop is smaller than a threshold $d_{low}$. In one embodiment, a subsequence $S=<p_h, p_{h+1},..., p_{h+k}>$ is a trace-stop if the following three conditions hold:

1. $v_i< v_{low}$ for every $h£i£h+k$ (low speed criterion)
2. $d_{h+1}+d_{h+2}+...+d_{h+k}<d_{low}$ (short distance criterion)
3. $v_{h-1}\geq v_{low}$ and $v_{h+k+1}\geq v_{low}$ (longest subsequence criterion)

GPS point $p_h$ is called the *head* of S and $p_{h+k}$ the *tail*. The centroid of the geolocations in S is called the *location* of S.

As used herein, unless otherwise specified, the term *stop* refers to a trace stop.

**Definition 5:** A *place* is a geographic area with certain functionality (e.g., as queried from and/or specified in the geographic database 135 or equivalent digital map data).

For example, a rest area is a place, and so is a restaurant, a grocery store, a gas station, and a warehouse.

**Definition 6:** A stop or event is called a *task stop or event* if the truck or vehicle 101 performs the stop connected to its primary purpose of transporting goods such as loading/unloading cargo and/or any other logistical function. A stop or event is called a *rest stop or event* otherwise, for instance, for the driver to rest.

By way of example, warehouses are typical places where task stops occur. Rest areas, restaurants, gas stations, and hotels are typical places where rest stops occur.

**Definition 7:** A *journey or trip* is a subsequence of $T$ that starts at the tail of a task stop and ends at the head of a task stop, and all the stops in between if any are rest stops.

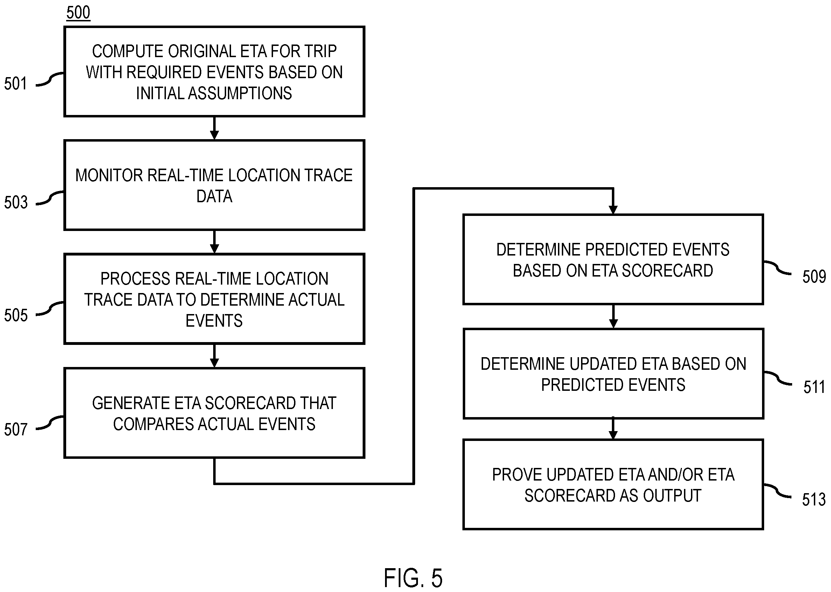

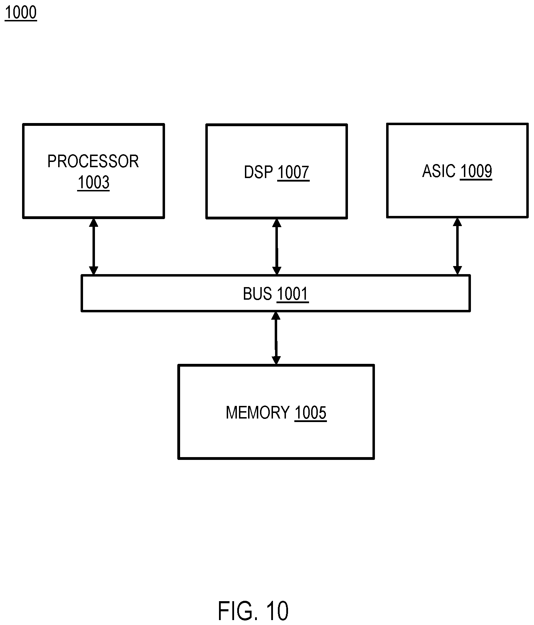

FIG. 5 is a flowchart of a process 500 for providing an ETA scorecard from vehicle location trace data 115, according to one example embodiment. In various embodiments, the mapping platform 119, ETA service 127, and/or any of their modules/components may perform one or more portions of the process 500 and may be implemented in, for instance, a chip set including a processor and a memory as shown in FIG. 10. As such, the mapping platform 119, ETA service 127, and/or any of their components/modules can provide means for accomplishing various parts of the process 500, as well as means for accomplishing embodiments of other processes described herein in conjunction with other components of the system 100. Although the process 500 is illustrated and described as a sequence of steps, it is contemplated that various embodiments of the process 500 may be performed in any order or combination and need not include all of the illustrated steps.

As described above, The ETA scorecard provides visibility on the different aspects, parameters, or KPIs of the trip (e.g., T&L trip by vehicle such as a truck or other commercial vehicle). Based on the differences between expected versus actual events related to the different aspects, the assumptions used in generating a corresponding ETA can be validated, either in binary form (e.g. true/false) or with a value detailing the deviations. In one embodiment, as part of this process, the ETA service 127 has information on at least the following: (1) the path driven by a vehicle (e.g., truck) or driver of the vehicle until now; (2) when and where the driver makes the necessary or required rest breaks (e.g., regulated HOS breaks); and (3) the impact of traffic. Information the that ETA service 127 may not know includes but is not limited to: (1) the allocated slots (e.g., delivery or task times) at the delivery location; and (2) the opening hours of the delivery location (e.g., warehouse, business, etc.). In addition, the ETA service 127 is configured with a set of initial assumptions that are used to calculate the original or reference ETA for the ETA scorecard. By way of example, these assumptions include but are not limited to and combination of the following: (1) the driver is rested; (2) here is only a single driver; (3) rest regulations are followed; (4) the trip is a full truckload (FTL) trip; (5) there are no refueling breaks; (6) a truck profile is used for route generation; (7) the optimal route (e.g., a generated by the routing engine) is taken; and (8) there is no hidden agenda (e.g., the truck does not plan to make extra stops or non-trip related stops).

With the ETA scorecard data 129 generated according to the various embodiments described herein, T&L companies will be empowered with comprehensive insights into every trip's ETA update and changes in context along the journeys. As stated above, by harnessing rich map data, routing capabilities with real-time traffic information, historical route patterns, local regulations and advanced patterns detections mechanisms, the ETA scorecard can be used to determine if the assumptions made at the beginning of the trip to provide the original, reference, and/or any previously computed ETA were correct.

In step 501, the mapping platform 119 and/or ETA service 127 computes an original estimated time of arrival (ETA) for a vehicle (e.g., commercial vehicle such as but not limited to a truck) traveling on a route for a trip (e.g., T&L trip). The trip is subject to one or more required events during the route. As used herein, the term "required event" is an event or stop that must be taken by the vehicle during the trip. In one embodiment, the one or more required events include one or more rest stops. For example, the one or more rest stops is required at a specified frequency, a specified duration, or a combination thereof; and wherein the one or more predicted events are based on the specified frequency, the specified duration, or a combination thereof. For example, the required event can be a regulated HOS break or other limit on the number of hours that can be driven by a driver as mandated by regulations. In other cases, the required event can be tasks or stops required by the T&L company operating the truck, end-customer, and/or other authority (e.g., transportation authority requiring trucks to stop at specific weigh stations or other inspection stations).

In one embodiment, the original ETA is computed based on one or more pre-trip predicted events that are predicted based on an initial set of assumptions (e.g., example assumptions as described above) and the one or more required events. The trip or route, for instance, generally includes a sequence of driving events and non-driving events (e.g., rest stops, task stops, refueling stops, etc.). Each event, in turn, takes different durations that can ultimately affect the ETA. Therefore, in one embodiment, the ETA service 127 can provide a set of predicted events or stops determined based on its set of initial assumptions to the routing engine to compute the initial route and corresponding ETA for the trip.

In one embodiment, the initial set of assumptions is based, at least in part, on prior location trace data for one or more previous commercial trips made by the driver. In addition or alternatively, as previously discussed, the initial set of assumptions or the one or more pre-trip predicted events relates to driver rest, use of a single driver, adherence to regulations, a full truckload shipment, no refueling break, an optimal route, no non-T&L trip related events, or a combination thereof.

In one embodiment, the ETA service 127 alone or in combination with the machine learning system 121 can train one or more machine learning models 123 to perform at least any of the following three ETA prediction methods:

- **Driving Time Prediction (DTP).** This method predicts ETA by predicting the driving time from the journey source location to the journey destination location without accounting for rest times.
- **Rest-Rule (RR).** This method first uses DTP to predict a driving time. Then it adds upon the driving time a rest time based on an EU rest time regulation (or equivalent regulation from a jurisdiction corresponding to where the vehicle 101 is operated). This EU regulation requires that a truck driver must rest for at least 45 minutes after a driving period of 4.5 hours. Thus, the RR method adds 45 minutes to ETA for every 4.5 hours of the driving time returned by DTP.
- **Extreme Gradient Boosting (XGB).** This method builds an XGBoost model based on journeys extracted using event classification as described herein. The model uses the following features of a journey:

  ○ DTP-ETA: the driving time in hour predicted by DTP;
  ○ Start-hour: the hour of day of the journey departure time, ranging from 0 to 23;
  ○ Source-duration: the duration in seconds of the source stop of the journey;
  ○ Day of week: the day of week of the journey departure time, ranging from 0 (Monday) to 6 (Sunday).

It is noted that the above examples of ETA calculation are provided by way of illustration and not as limitations. It is contemplated that any equivalent ETA calculation process can be used.

In step 503, the mapping platform 119 and/or ETA service 127 monitor real-time location trace data collected from one or more sensors of the commercial vehicle on the route during a monitoring period. In one embodiment, a service that monitors real-time location trace data from sensors on commercial vehicles during a monitoring period employs a comprehensive and dynamic approach. The process begins with the installation of sensors on the commercial vehicle, which could include GPS devices, accelerometers, and other relevant sensors. These sensors continuously collect and transmit data (e.g., over the communication network 137), providing real-time information on the vehicle's location, speed, acceleration, and other pertinent metrics. The ETA service 127, for instance, can use a centralized platform (e.g., mapping platform 119) that aggregates and processes the incoming data streams (e.g., location trace data 115) from one or more monitored vehicles (e.g., a fleet of vehicles operated by a T&L company). The mapping platform 119 can be equipped with a data processing infrastructure capable of handling large volumes of real-time data efficiently.

In step 505, the mapping platform 119 and/or ETA service 127 processes the real-time location trace data to determine one or more actual events of the commercial vehicle, the driver, or a combination occurring during monitoring period. The mapping platform 119 and/or ETA service 127 integrates incoming location trace data from sensors on the commercial vehicle, such as GPS devices, accelerometers, and other relevant sources. Leveraging advanced algorithms and geospatial analysis, the platform identifies key events in real-time as previously discussed. These events may include the vehicle's stops, starts, route deviations, speed variations, and idle times. It is contemplated that the mapping platform 119 and/or ETA service 127 can use any process for event or stop classification including both manual and/or automated processes (e.g., based on ML system 121 and/or ML models 123). As used herein, event or stop classification refers to the process of determining from location trace data 115 where and how long events (e.g., rest stops, task stops, refueling stops, driving events, non-driving events, etc.) occur along a route covered by the location trace data 115. As previously noted, manual means for event or stop classification include but are not limited manual logging of a trip by a driver whereby a driver specifies the event/stop along with the times of each stop or event. The times in the log can then be compared to the location trace data 115 to classify data points of the location trace data 115 accordingly. An example of automated means for stop classification includes automatically processing the location trace data 115 to identify stop or event locations and then identifying contextual information (e.g., sequence of multiple stops, places associated with the stops, etc.) to classify the detected stop/event (e.g., using ML system 121 and/or ML models 123). One example of automated stop classification that can be used according to the various embodiments described herein can be found in U. S. Patent Application No. 17/977,679, entitled "Method and Apparatus for Extracting Journeys from Vehicle Location Trace Data", filed October 31, 2022, which is incorporated by reference herein in its entirety.

In step 507, the mapping platform 119 generates a real-time ETA scorecard that compares the one or more actual events to the one or more required events, the one or more pre-trip predicted events, one or more prior events determined for one or more previous monitoring periods, or a combination thereof. As previously discussed, the ETA scorecard will provide an explanation for why an ETA estimate (current estimate) deviates from a previously ETA estimate (reference estimate). This is done by reporting differences between a set of predicted parameters at reference ETA calculation time vs actual events/actions performed by the driver up until the current ETA calculation time. For example, actual events comprise a list of stopping (as task/rest) and driving periods that the vehicle has been detected to perform during a monitoring period (e.g., until the input departure time or at intervals thereof where updated ETAs are requested or scheduled). Scheduled or predicted actions comprise a list of stop events (or other non-driving events) and driving events that are predicted to be performed until the vehicle reaches its destination.

In one embodiment, the overall trip duration, ETA, sequence of events represents or can otherwise be used to determine the context of the trip. A context delta contains the deviation of certain parameters between two arbitrary contexts such as but not limited to a delta between a reference context and a current context.

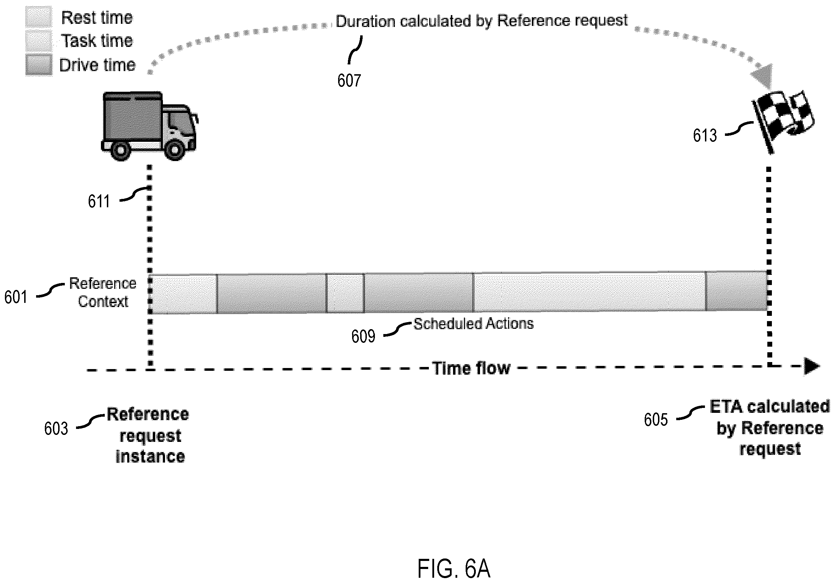

FIG. 6A is a diagram illustrating an example reference context 601, according to one example embodiment. As used herein, the term "reference context" refers to the context of a previous ETA estimation call that the ETA service 127 uses as a basis for comparison to explain why a later ETA estimation is deviating from. As shown in the example of FIG. 6A, reference request instance 603 is used to respond to an ETA estimation call to compute a reference ETA 605 for a T&L trip. The ETA 605 is based on the duration 607 of a sequence of scheduled actions or events 609 from an origin 611 (e.g., location of the vehicle at the time the reference request instance 603 was made) to a destination 613 as calculated by the reference request. As discussed previously, the scheduled or predicted actions 609 can be used to determine the values of the expected parameters or KPIs associated with the reference context 601 for the basis of comparison in the ETA scorecard. Thus, the reference context 601 is used to fill in the expected parameters (e.g., pre-trip predicted values) of the ETA scorecard. The reference context 601 will then be compared against the "current context" (e.g., representing actual events or parameters) determined as described below.

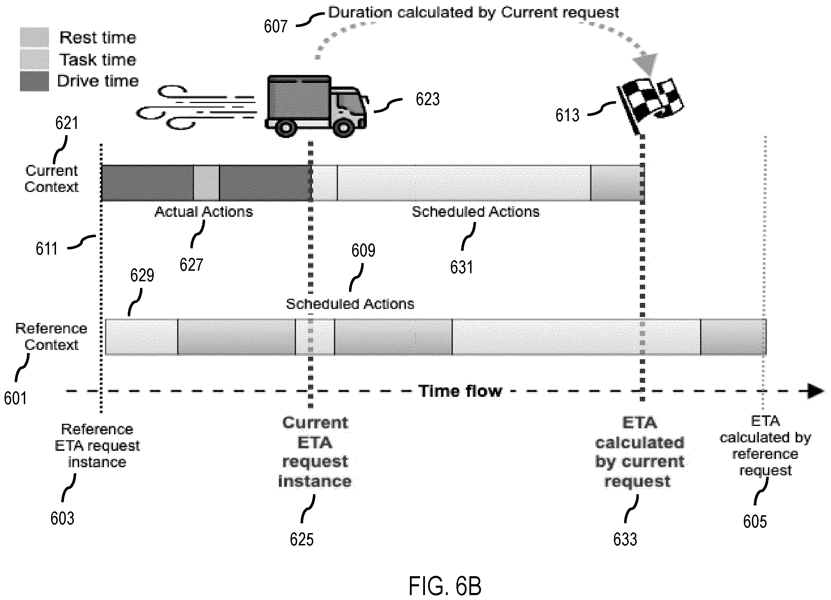

FIG. 6B is a diagram illustrating an example current context 621, according to one example embodiment. As used herein, the term "current context" refers to the context of a later ETA estimation call (e.g., later in the time flow than the call associated with the reference request instance 603) that has a deviating ETA from the reference context 601. The example of FIG. 6B continues the example of FIG. 6A, but the vehicle 623 has started its trip and has driven for a duration between the initial reference request instance 603 and a current ETA request instance 625. For this duration, the ETA service 127 has monitored location trace data 115 from the vehicle 623 and extracted actual actions 627 performed during the monitoring period. An ETA scorecard comparing the actual actions 627 to the scheduled actions 609 indicates that the driver did not follow the scheduled initial rest period 629 and started driving right away (e.g., a violation of required rest regulations). Thus, the initial ETA 605 calculated for the reference request is not likely to be accurate because of the rest violation.

As a result, in step 509, the mapping platform 119 and/or ETA service 127 determines one or more predicted events for one or more subsequent monitoring periods based on the real-time ETA scorecard. A subsequent monitoring period assumes that the vehicle has not completed its trip, but an updated ETA has been requested. This monitoring period can be any duration remaining in the trip. As discussed above, the monitoring period can be scheduled, on demand, or determined according to any fixed schedule depending on the ETA monitoring requirements and/or preferences of the user. Then in step 511, the mapping platform 119 determines an updated ETA for the route based on the one or more predicted events. Because the route comprises a sequence of driving and non-driving events, deviations from expected events can affect the overall ETA. Thus, the ETA is updated based on the new predictions for the subsequent monitoring period.

In the example of FIG. 6B, this means that the ETA service 127 will deduct the duration of the scheduled rest stop 629 from the scheduled actions 631 of the current context 621. This results in the ETA 633 calculated by the current request to be earlier than the original ETA calculated by the reference request instance 603. This update is facilitated by the ETA scorecard generated for the trip.

In one embodiment, the ETA score card is generated with any selected KPI or ETA-related parameter. For example, the parameters can include but are not limited to an expected route distance or time versus an actual route distance or time, one or more expected rest events versus one or more actual rest events, one or more expected task events versus one or more actual task events, an expected driving time versus an actual driving time, one or more expected traffic events versus one or more actual traffic events, or a combination thereof.

In step 513, the mapping platform 119 provides the updated ETA, the real-time ETA scorecard, or a combination thereof as an output. For example, after a completion of the trip (e.g., T&L industry trip), the mapping platform 119 can present a user interface depicting a chronology of the one or more actual events determined from the real-time location trace data. In addition or alternatively, the ETA scorecard data 129 can be provided directly as a data structure without generating a user interface.

In one embodiment, the updated ETA, the real-time ETA scorecard, or a combination thereof is iteratively updated as each of the one or more subsequent monitoring periods during the route is completed.

In one embodiment, the ETA scorecard can be used for during-trip or post-trip analysis. For example, the mapping platform 119 can determine one or more factors contributing to an ETA deviation between the original ETA and the updated ETA based on the ETA scorecard at any point during the trip after actual events are detected. For example, the ETA scorecard parameters can be used to explain the reason for an ETA deviation between different contexts (e.g., reference and current contexts, context at time 1 versus context at time 2, etc.).

Examples of the different parameters for comparison include but are not limited to:

1. The delta or deviation between expected and actual rest durations. For example, differences in durations can indicate deviations from mandated rest regulations. In one embodiment, current and actual rest durations can be determined according to:

$$\sum_{T.ref}^{T.cur} (CurrentContextActualRests)$$

$$\sum_{T.ref}^{T.cur} (CurrentContextActualRests)$$

where $T.cur$ = current context, and $T.ref$ = reference context.

2. The delta or deviation between expected and actual task durations. For example, differences in durations can indicate arriving at task locations outside of opening hours and having to wait for the location or business to open. In one embodiment, current task durations can be determined according to:

$$\sum_{T.ref}^{T.cur} (CurrentContextActualTasks)$$

$$\sum_{T.ref}^{T.cur} (CurrentContextActualTasks)$$

where $T.cur$ = current context, and $T.ref$ = reference context.

3. The delta or deviation between expected and actual drive durations. For example, differences in durations can indicate that a driver is driving at other than an expected speed (e.g., slower or faster). In one embodiment, current drive durations can be determined according to:

$$\sum_{T.ref}^{T.cur} (CurrentContextActualDrive)$$

$$\sum_{T.ref}^{T.cur} (CurrentContextActualDrive)$$

where $T.cur$ = current context, and $T.ref$ = reference context.

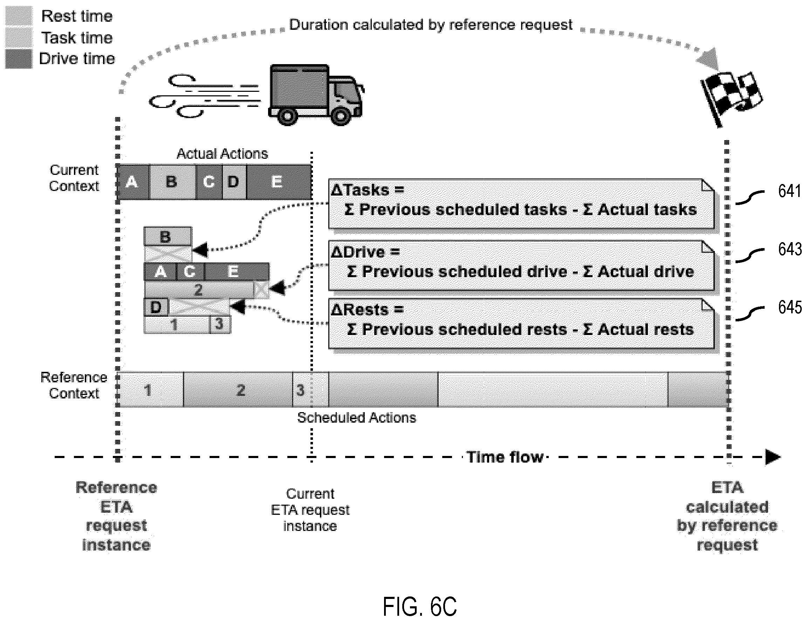

FIG. 6C is a diagram illustrating example calculations for determining deviations for task duration deviations 641, drive duration deviations 643, and rest duration deviations 645, according to one example embodiment. For example, as shown, the task duration deviation 641 ($\Delta Tasks$), drive duration deviations 643 ($\Delta Drive$), and rest duration deviations

645 (ΔRests) can be computed as follows:

$$\Delta Tasks = \sum Previous\ scheduled\ tasks - \sum Actual\ tasks$$

$$\Delta Drive = \sum Previous\ scheduled\ drive - \sum Actual\ drive$$

$$\Delta Rests = \sum Previous\ scheduled\ rests - \sum Actual\ rests$$

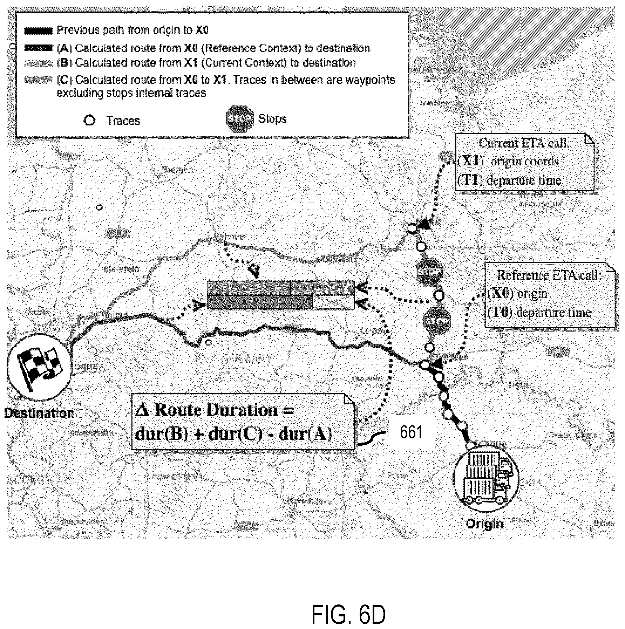

4. The delta or deviation between expected and actual overall route durations. This represents the overall route duration change or difference from reference to destination due to deviating from the route predicted previously for the reference context. In one embodiment, current drive durations can be determined as illustrated equation 661 of FIG. 6D.

5. The delta or deviation between expected and actual overall driven distance duration. The purpose of this parameter is to provide a measure of the time lost/gained due to actual driving speeds being slower/higher than the speeds assumed at route calculation time. This includes delays due to traffic and any overspeed/underspeed driving. In one embodiment, current drive durations can be determined as illustrated equation 661 of FIG. 6D.

In one embodiment, deviations in one or more of the above parameters may result in a different ETA, which manifests through a deviation in the Current Context scheduled actions (e.g., predicted events for the next monitoring period).

In one embodiment, the ETA service 127 can us determined context during the trip to validate the initial assumptions and creation of the ETA scorecard. As soon as one of those assumptions is found to be incorrect or if its confidence level drops, a new ETA is provided together with the reason(s) that triggered this ETA update. For example, the ETA service 127 can determine that an updated ETA is now 4 hours earlier than the original ETA because the ETA service 127 detected that the truck very likely has 2 drivers (e.g., based on patterns of rest events). As another example, the ETA service 127 can determine that an updated ETA is now 3h later because the driver was most likely not fully rested at the beginning of the journey (e.g., based on patterns, timing, durations, etc. of rest events). Accordingly, based on this real-time information (e.g., real-time ETA scorecard data 129), customers can better assess the risks related to the trips and hence better anticipate how to react to those changes.

In one embodiment, the ETA scorecard data 129 can also be used to better determine if some of the delays have a chance to be caught up or if this delay is more likely to keep increasing during the trip. Examples of this assessment include the following scenarios.

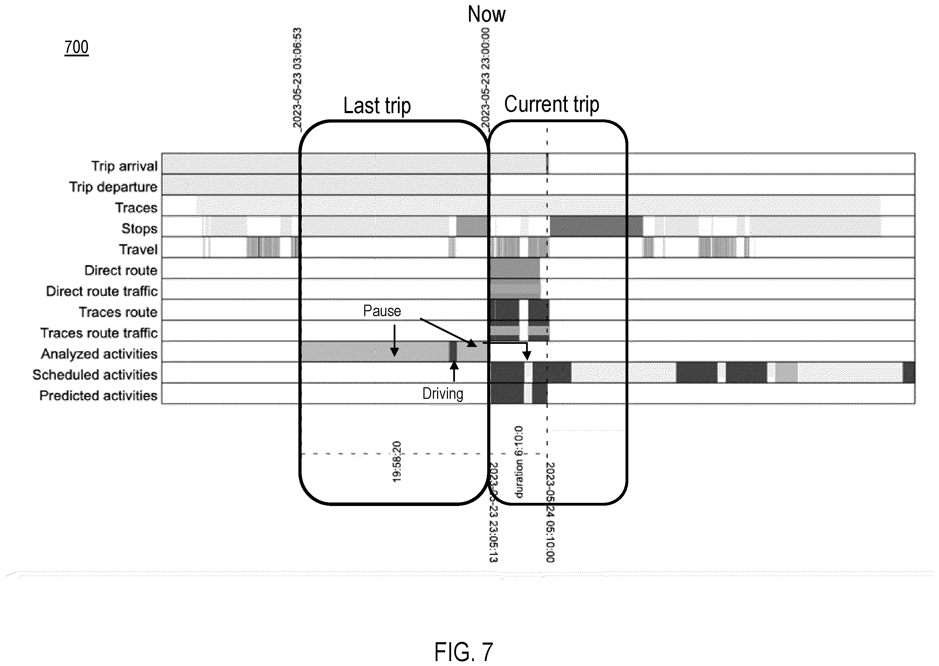

Example scenario 1: a driver was not fully rested when starting the trip. The ETA service 127 can detect this scenario using means such as but not limited to: (1) getting location traces from past trips to determine when the last break taken by the driver was; and (2) detecting that a driver is making a rest break earlier than expected on the current trip (e.g., as illustrated in example 700 of FIG. 7, which illustrates an example scorecard for this scenario). In example 700 of FIG. 7, the ETA determined without the driver taking a rest (e.g., assuming the driver is fully rested) is 5hr 21 leading to an error of 1hr 01 min from the actual ETA, and the ETA determined with the predicted rest (because the driver was not fully rested before starting the trip) is 6hr 10min leading to an error of 12 min. Because the error is less based on assuming that the driver was not fully rested and would need a break during the trip, then the ETA service 127 can determine that the driver was not fully rested. The following would then be possible impacts of the trip planning: (1) in the best case, no extra ETA time, the rest break would be taken earlier, making the other breaks (e.g., regulated HOS breaks) to also happen earlier; (2) in other cases, it might add more rest breaks, leading to longer ETA; (3) risk of some ripple effects, e.g., reaching some unplanned traffic jams at commute time around large cities or reaching a delivery location when the warehouse or business is closed for receiving delivery; and (4) in a worse case, an extra rest stop might make the driver reach the time limit leading to mandatory full day rest pause, thus reaching the destination one day later. Thus, the possible impacts on the ETA are primarily only negative (e.g., from no impact to one day delay).

Example scenario 2: The trip has two drivers. The timing for detecting this scenario include: (1) at the start of the trip if this information is shared via API; and (2) otherwise, early signs can be detected after the time for requiring the first mandatory rest period (e.g., 5h) when the first rest is not taken. The ETA service 127 can use the following means to detect this scenario: (1) detecting no or very short rests that would not account for rest stops during the day would be the first "hints", e.g., detection of a few 10min breaks but no 30-45min break; and (2) exceeding the maximum daily driving limit (e.g., 9 hours) of driving without taking a full day rest would be another indication. The possible impacts on journey planning include but are not limited to fewer and shorter stops or longer drives with two (e.g., multiple drivers may be able to drive continuously for up to 18 hours or any other similar time). Accordingly, the possible impacts on the final ETA includes but are not limited to shortening the ETA.

Example scenario 3: Driver not following the required resting times (e.g., regulated HOS breaks). This scenario is similar to the multiple driver scenario above as the observations show continuous driving for longer periods. The means to detect this scenario are also similar to example scenario 3 where early signs can be detected after when the first rest is not taken. In one embodiment, the ETA service 127 can then be configured to monitor closely what happens in the following hours to detect if some rests are just taken a bit later (e.g., with a time threshold of the expected time) or if they are skipped entirely. The possible impacts on journey planning are that the longer the trip, the more the mandated "full day rests" are accumulating. The possible impacts on the final ETA are that ETA will be shorter, but it comes with safety risks and fine related risks.

Example scenario 4: FTL driver is making some extra deliveries. The ETA service 127 can detect this scenario using means such as but limited to: (1) the mapping platform 119's event/stop classification engine is able to detect such unplanned stops which are not rests or traffic jams, in the case of FTL deliveries; and (2) stops or deliveries along the journey might be harder to detect but deviations from the route give more clues about those extra deliveries. The possible impacts on journey planning include but are not limited to that such deliveries would typically increase the total distance of the journey, add some extra stops, and thus increase overall ETA. Accordingly, the possible impacts on the final ETA are generally negative. The timing of the detection of this scenario include: (1) after a stop has been made, depending on how confident that stop classification has been, (2) the ETA service 127 can also detect when the driver deviates from the computed "fastest" or optimal route.

Example scenario 5: Truck profile was incorrectly set when computing a route. The ETA service 127 can use means such as but not limited to: (1) observing the truck driver's speed on links compared to speed limit (excluding traffic jams or slowdowns); and (2) ideally this information would be provided by API before the trip starts. The possible impacts on journey planning include but are not limited to driving segments that will appear longer than they need to be if 40T was set instead of a lighter truck (and vice versa). The possible impacts on the final ETA include but are not limited to a scenario where a 40T truck profile was used but a lighter truck was driving, then the difference might be +/-30%. For example, in some jurisdictions such as France, vehicles between 3.5t and 12t have restrictions of 50km/h in towns, 80km/h on open roads and 90km/h on both dual carriageways and motorways. For truck drivers in excess of 12t the speed limit on open roads is further reduced to 60km/h and limited to 80km/h. Thus, if the wrong truck profile is set, the wrong speeds will be used for computing the ETA. The timing of the detection of this scenario includes but is not limited to: (1) after the beginning of the trip, once enough data has been accumulated to determine a mismatch between the speed profile and the road speed limits. In one embodiment, the ETA scorecard feature, a parameter called "slow" (e.g., the amount of time the vehicle is driving slower than expected), is dedicated to this identification. For example, if there is a constant increase in the slowness, then the truck profile is likely incorrect. If the value remains steady, then profile may be fine.

Example scenario 6: Driver is not taking optimal route. The ETA service 127 can detect this scenario using means such as but not limited to: (1) any deviation from the optimal route; and (2) he "Route" parameter in the ETA scorecard reflects the deviation between the optimal route and the route taken, based on ground truth traces. The possible impacts on journey planning and the final ETA include but are not limited to that it generally causes trips to be longer in distance, often leading to longer ETAs.

Example scenario 7: Driver is making unplanned breaks. The ETA service 127 can detect this scenario using means such as but not limited to detecting more breaks than the predicted or required number of breaks. The possible impacts on journey planning and final ETA are generally that the ETA will be longer than predicted.

Returning to FIG. 1, as shown, the system includes the mapping platform 119 and/or ETA service 127 operating alone or in combination with the machine learning system 121 for journey extraction and ETA scorecard creation from vehicle location trace data 115 according to the various embodiments described herein. In one embodiment, the machine learning system 121 of the mapping platform 119 includes or is otherwise associated with one or more machine learning models 123 (e.g., decision trees, neural networks, or other equivalent network using algorithms such as but not limited to an evolutionary algorithm, reinforcement learning, or equivalent) for stop classification, journey extraction, ETA prediction, etc.

In one embodiment, the mapping platform 119 has connectivity over the communication network 137 to the services platform 139 that provides one or more services 141 that can use event classification data 117, route data 133, ETA scorecard data 129, and/or other data generated by the system 100. By way of example, the services 141 may be third party services and include but is not limited to mapping services, navigation services, travel planning services, notification services, social networking services, content (e.g., audio, video, images, etc.) provisioning services, application services, storage services, contextual information determination services, location-based services, information-based services (e.g., weather, news, etc.), etc. In one embodiment, the services 141 uses event classification data 117, route data 133, ETA scorecard data 129 and/or other data generated by the mapping platform 119 to provide services 141 such as navigation, mapping, other location-based services, etc. to the vehicles 101, UEs 145, and/or applications 147 executing on the UEs 145.

In one embodiment, the mapping platform 119 and/or ETA service 127 may be a platform with multiple interconnected components. The mapping platform 119 and/or ETA service 127 may include multiple servers, intelligent networking devices, computing devices, components, and corresponding software for providing spatial aggregation for location-based services according to the various embodiments described herein. In addition, it is noted that the mapping platform 119 and/or ETA service may be a separate entity of the system 100, a part of the one or more services 141, a part of the services platform 139, or included within components of the vehicles 101 and/or UEs 145.

In one embodiment, content providers 143 may provide content or data (e.g., including geographic data, etc.) to the geographic database 135, mapping platform 119, machine learning system 121, the services platform 139, the services 141, the vehicles 101, the UEs 145, and/or the applications 147 executing on the UEs 145. The content provided may be any type of content, such as ETA data, machine learning models, location trace data, trip data, map embeddings, map content, textual content, audio content, video content, image content, etc. In one embodiment, the content providers 143 may provide content that may aid in journey extraction from location trace data or stop classification according to the various embodiments described herein. In one embodiment, the content providers 143 may also store content associated with the mapping platform 119, ETA service 127, machine learning system 121, geographic database 135, services platform 139, services 141, and/or any other component of the system 100. In another embodiment, the content providers 143 may manage access to a central repository of data, and offer a consistent, standard interface to data, such as a repository of the geographic database 135.

In one embodiment, the vehicles 101 and/or UEs 145 may execute software applications 147 to use or access event classification data 117, route data 133, ETA scorecard data 129, etc. according to the embodiments described herein. By way of example, the applications 147 may also be any type of application that is executable on the vehicles 101 and/or UEs 145, such as autonomous driving applications, mapping applications, location-based service applications, navigation applications, device control applications, content provisioning services, camera/imaging application, media player applications, social networking applications, calendar applications, and the like. In one embodiment, the applications 147 may act as a client for the mapping platform 119 and perform one or more functions associated with stop classification and/or journey extraction alone or in combination with the mapping platform 119.

By way of example, the vehicles 101 and/or UEs 145 is or can include any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the vehicles 101 and/or UEs 145 can support any type of interface to the user (such as "wearable" circuitry, etc.). In one embodiment, the vehicles 101 and/or UEs 145 may be associated with or be a component of a vehicle or any other device.

In one embodiment, the communication network 137 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, 5G New Radio networks, code division multiple access (CDMA), wideband code division multiple access (WCDMA), wireless fidelity (Wi-Fi), wireless LAN (WLAN), Bluetooth®, Internet Protocol (IP) data casting, satellite, mobile ad-hoc network (MANET), and the like, or any combination thereof.

By way of example, the mapping platform 119, ETA service 127, machine learning system 121, services platform 139, services 141, vehicles 101 and/or UEs 145, and/or content providers 143 communicate with each other and other components of the system 100 using well known, new or still developing protocols. In this context, a protocol includes a set of rules defining how the network nodes within the communication network 137 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

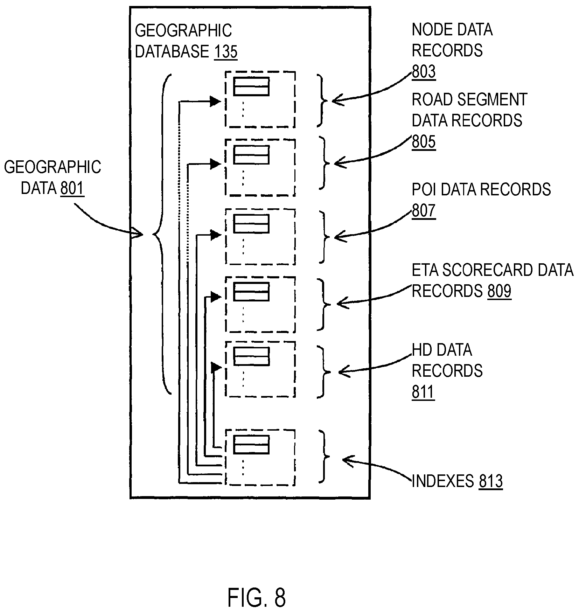

FIG. 8 is a diagram of the geographic database 135, according to one embodiment. In one embodiment, the geographic database 135 includes geographic data 801 used for (or configured to be compiled to be used for) mapping and/or navigation-related services, such as for providing map embedding analytics according to the embodiments described herein. For example, the map data records stored herein can be used to determine the semantic relationships among the map features, attributes, categories, etc. represented in the geographic data 801. In one embodiment, the geographic database 135 includes high definition (HD) mapping data that provide centimeter-level or better accuracy of map features. For example, the geographic database 135 can be based on Light Detection and Ranging (LiDAR) or equivalent technology to collect billions of 3D points and model road surfaces and other map features down to the number lanes and their widths. In one embodiment, the HD mapping data (e.g., HD data records 811) capture and store details such as the slope and curvature of the road, lane markings, roadside objects such as signposts, including what the signage denotes. By way of example, the HD mapping data enable highly automated vehicles to precisely localize themselves on the road.

In one embodiment, geographic features (e.g., two-dimensional or three-dimensional features) are represented using polylines and/or polygons (e.g., two-dimensional features) or polygon extrusions (e.g., three-dimensional features). In one embodiment, these polylines/polygons can also represent ground truth or reference features or objects (e.g., signs, road markings, lane lines, landmarks, etc.) used for visual odometry. For example, the polylines or polygons can correspond to the boundaries or edges of the respective geographic features. In the case of a building, a two-dimensional polygon can be used to represent a footprint of the building, and a three-dimensional polygon extrusion can be used to represent the three-dimensional surfaces of the building. Accordingly, the terms polygons and polygon extrusions as used herein can be used interchangeably.

In one embodiment, the following terminology applies to the representation of geographic features in the geographic database 135.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 135 follows certain conventions. For example, links do not cross themselves and do not cross each other except at a node. Also, there are no duplicated shape points, nodes, or links. Two links that connect each other have a common node. In the geographic database 135, overlapping geographic features are represented by overlapping polygons. When polygons overlap, the boundary of one polygon crosses the boundary of the other polygon. In the geographic database 135, the location at which the boundary of one polygon intersects the boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 135 includes node data records 803, road segment or link data records 805, POI data records 807, ETA scorecard data records 809, HD mapping data records 811, and indexes 813, for example. More, fewer, or different data records can be provided. In one embodiment, additional data records (not shown) can include cartographic ("carto") data records, routing data, and maneuver data. In one embodiment, the indexes 813 may improve the speed of data retrieval operations in the geographic database 135. In one embodiment, the indexes 813 may be used to quickly locate data without having to search every row in the geographic database 135 every time it is accessed. For example, in one embodiment, the indexes 813 can be a spatial index of the polygon points associated with stored feature polygons.

In exemplary embodiments, the road segment data records 805 are links or segments representing roads, streets, or paths, as can be used in the calculated route or recorded route information for determination of one or more personalized routes. The node data records 803 are end points (for example, representing intersections or an end of a road) corresponding to the respective links or segments of the road segment data records 805. The road link data records 805 and the node data records 803 represent a road network, such as used by vehicles, cars, and/or other entities. Alternatively, the geographic database 135 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 135 can include data about the POIs and their respective locations in the POI data records 807. The geographic database 135 can also include data about places, such as cities, towns, or other communities, and other geographic features, such as bodies of water, mountain ranges, etc. Such place or feature data can be part of the POI data records 807 or can be associated with POIs or POI data records 807 (such as a data point used for displaying or representing a position of a city).

In one embodiment, the geographic database 135 can also include ETA scorecard data records 809 for storing detected stops, event classification data 117, route data 133, ETA scorecard data 129, machine learning models, machine learning model parameters, and/or any other related data that is used or generated according to the embodiments described herein. By way of example, the ETA scorecard data records 809 can be associated with one or more of the node records 803, road segment records 805, and/or POI data records 807 to associate the event classification data 117, route data 133, ETA scorecard data 129, etc. with specific places, POIs, geographic areas, and/or other map features. In this way, the ETA scorecard data records 809 can also be associated with the characteristics or metadata of the corresponding records 803, 805, and/or 807.

In one embodiment, as discussed above, the HD mapping data records 811 model road surfaces and other map features to centimeter-level or better accuracy. The HD mapping data records 811 also include ground truth object models that provide the precise object geometry with polylines or polygonal boundaries, as well as rich attributes of the models. These rich attributes include, but are not limited to, object type, object location, lane traversal information, lane types, lane marking types, lane level speed limit information, and/or the like. In one embodiment, the HD mapping data records 811 are divided into spatial partitions of varying sizes to provide HD mapping data to end user devices with near real-time speed without overloading the available resources of the devices (e.g., computational, memory, bandwidth, etc. resources).

In one embodiment, the HD mapping data records 811 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the HD mapping data records 811.

In one embodiment, the HD mapping data records 811 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time data (e.g., including probe trajectories) also at centimeter-level accuracy. Other sensor data can include vehicle telemetry or operational data such as windshield wiper activation state, braking state, steering angle, accelerator position, and/or the like.

In one embodiment, the geographic database 135 can be maintained by the content provider 143 in association with the services platform 139 (e.g., a map developer). The map developer can collect geographic data to generate and enhance the geographic database 135. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used.

The geographic database 135 can be a master geographic database stored in a format that facilitates updating, maintenance, and development. For example, the master geographic database or data in the master geographic database can be in an Oracle spatial format or other format (e.g., capable of accommodating multiple/different map layers), such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF)) to organize and/or configure the data for performing navigation-related functions and/or services, such as route calculation, route guidance, map display, speed calculation, distance and travel time functions, and other functions, by a navigation device, such as by vehicles 101 and/or UEs 145. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for providing ETA scorecard creation may be advantageously implemented via software, hardware (e.g., general processor, Digital Signal Processing (DSP) chip, an Application Specific Integrated Circuit (ASIC), Field Programmable Gate Arrays (FPGAs), etc.), firmware, circuitry, or a combination thereof. Such exemplary hardware for performing the described functions is detailed below.

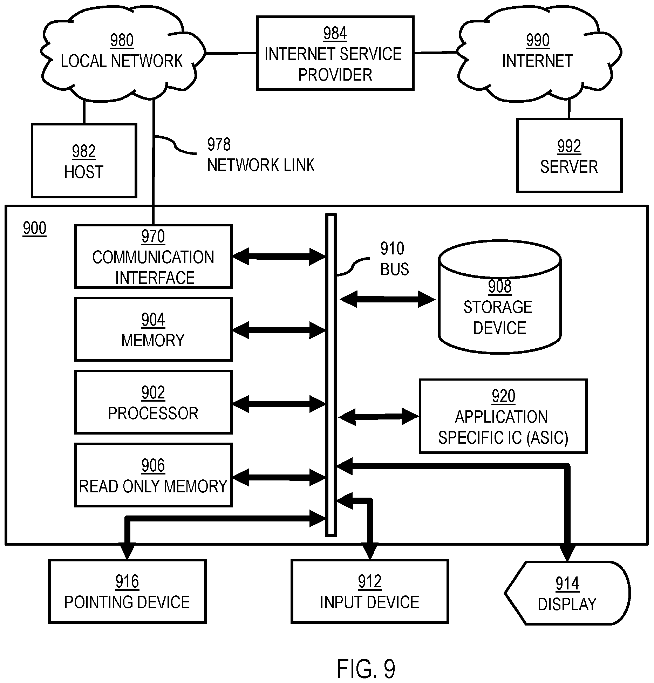

FIG. 9 illustrates a computer system 900 upon which an embodiment of the invention may be implemented. Computer system 900 is programmed (e.g., via computer program code or instructions) to provide ETA scorecard creation as described herein and includes a communication mechanism such as a bus 910 for passing information between other internal and external components of the computer system 900. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 910 includes one or more parallel conductors of information so that information is transferred quickly among devices coupled to the bus 910. One or more processors 902 for processing information are coupled with the bus 910.

A processor 902 performs a set of operations on information as specified by computer program code related to providing ETA scorecard creation. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations includes bringing information in from the bus 910 and placing information on the bus 910. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 902, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 900 also includes a memory 904 coupled to bus 910. The memory 904, such as a random access memory (RAM) or other dynamic storage device, stores information including processor instructions for providing ETA scorecard creation. Dynamic memory allows information stored therein to be changed by the computer system 900. RAM allows a unit of information stored at a location called a memory address to be stored and retrieved independently of information at neighboring addresses. The memory 904 is also used by the processor 902 to store temporary values during execution of processor instructions. The computer system 900 also includes a read only memory (ROM) 906 or other static storage device coupled to the bus 910 for storing static information, including instructions, that is not changed by the computer system 900. Some memory is composed of volatile storage that loses the information stored thereon when power is lost. Also coupled to bus 910 is a non-volatile (persistent) storage device 908, such as a magnetic disk, optical disk, or flash card, for storing information, including instructions, that persists even when the computer system 900 is turned off or otherwise loses power.

Information, including instructions for providing ETA scorecard creation, is provided to the bus 910 for use by the processor from an external input device 912, such as a keyboard containing alphanumeric keys operated by a human user, or a sensor. A sensor detects conditions in its vicinity and transforms those detections into physical expression compatible with the measurable phenomenon used to represent information in computer system 900. Other external devices coupled to bus 910, used primarily for interacting with humans, include a display device 914, such as a cathode ray tube (CRT) or a liquid crystal display (LCD), or plasma screen or printer for presenting text or images, and a pointing device 916, such as a mouse or a trackball or cursor direction keys, or motion sensor, for controlling a position of a small cursor image presented on the display 914 and issuing commands associated with graphical elements presented on the display 914. In some embodiments, for example, in embodiments in which the computer system 900 performs all functions automatically without human input, one or more of external input device 912, display device 914 and pointing device 916 is omitted.

In the illustrated embodiment, special purpose hardware, such as an application specific integrated circuit (ASIC) 920, is coupled to bus 910. The special purpose hardware is configured to perform operations not performed by processor 902 quickly enough for special purposes. Examples of application specific ICs include graphics accelerator cards for generating images for display 914, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 900 also includes one or more instances of a communications interface 970 coupled to bus 910. Communication interface 970 provides a one-way or two-way communication coupling to a variety of external devices that operate with their own processors, such as printers, scanners, and external disks. In general, the coupling is with a network link 978 that is connected to a local network 980 to which a variety of external devices with their own processors are connected. For example, communication interface 970 may be a parallel port or a serial port or a universal serial bus (USB) port on a personal computer. In some embodiments, communications interface 970 is an integrated services digital network (ISDN) card or a digital subscriber line (DSL) card or a telephone modem that provides an information communication connection to a corresponding type of telephone line. In some embodiments, a communication interface 970 is a cable modem that converts signals on bus 910 into signals for a communication connection over a coaxial cable or into optical signals for a communication connection over a fiber optic cable. As another example, communications interface 970 may be a local area network (LAN) card to provide a data communication connection to a compatible LAN, such as Ethernet. Wireless links may also be implemented. For wireless links, the communications interface 970 sends or receives or both sends and receives electrical, acoustic, or electromagnetic signals, including infrared and optical signals, that carry information streams, such as digital data. For example, in wireless handheld devices, such as mobile telephones like cell phones, the communications interface 970 includes a radio band electromagnetic transmitter and receiver called a radio transceiver. In certain embodiments, the communications interface 970 enables connection to the communication network 137 for providing ETA scorecard creation.

The term computer-readable medium is used herein to refer to any medium that participates in providing information to processor 902, including instructions for execution. Such a medium may take many forms, including, but not limited to, non-volatile media, volatile media, and transmission media. Non-volatile media include, for example, optical or magnetic disks, such as storage device 908. Volatile media include, for example, dynamic memory 904. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization, or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 978 typically provides information communication using transmission media through one or more networks to other devices that use or process the information. For example, network link 978 may provide a connection through local network 980 to a host computer 982 or to equipment 984 operated by an Internet Service Provider (ISP). ISP equipment 984 in turn provides data communication services through the public, worldwide packet-switching communication network of networks now commonly referred to as the Internet 990.

A computer called a server host 992 connected to the Internet hosts a process that provides a service in response to information received over the Internet. For example, server host 992 hosts a process that provides information representing video data for presentation at display 914. It is contemplated that the components of the system can be deployed in various configurations within other computer systems, e.g., host 982 and server 992.

FIG. 10 illustrates a chip set 1000 upon which an embodiment of the invention may be implemented. Chip set 1000 is programmed to provide ETA scorecard creation as described herein and includes, for instance, the processor and memory components described with respect to FIG. 15 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1000 includes a communication mechanism such as a bus 1001 for passing information among the components of the chip set 1000. A processor 1003 has connectivity to the bus 1001 to execute instructions and process information stored in, for example, a memory 1005. The processor 1003 may include one or more processing cores with each core configured to perform independently. A multi-core processor enables multiprocessing within a single physical package. Examples of a multi-core processor include two, four, eight, or greater numbers of processing cores. Alternatively or in addition, the processor 1003 may include one or more microprocessors configured in tandem via the bus 1001 to enable independent execution of instructions, pipelining, and multithreading. The processor 1003 may also be accompanied with one or more specialized components to perform certain processing functions and tasks such as one or more digital signal processors (DSP) 1007, or one or more application-specific integrated circuits (ASIC) 1009. A DSP 1007 typically is configured to process real-world signals (e.g., sound) in real time independently of the processor 1003. Similarly, an ASIC 1009 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1003 and accompanying components have connectivity to the memory 1005 via the bus 1001. The memory 1005 includes both dynamic memory (e.g., RAM, magnetic disk, writable optical disk, etc.) and static memory (e.g., ROM, CD-ROM, etc.) for storing executable instructions that when executed perform the inventive steps described herein to provide ETA scorecard creation. The memory 1005 also stores the data associated with or generated by the execution of the inventive steps.

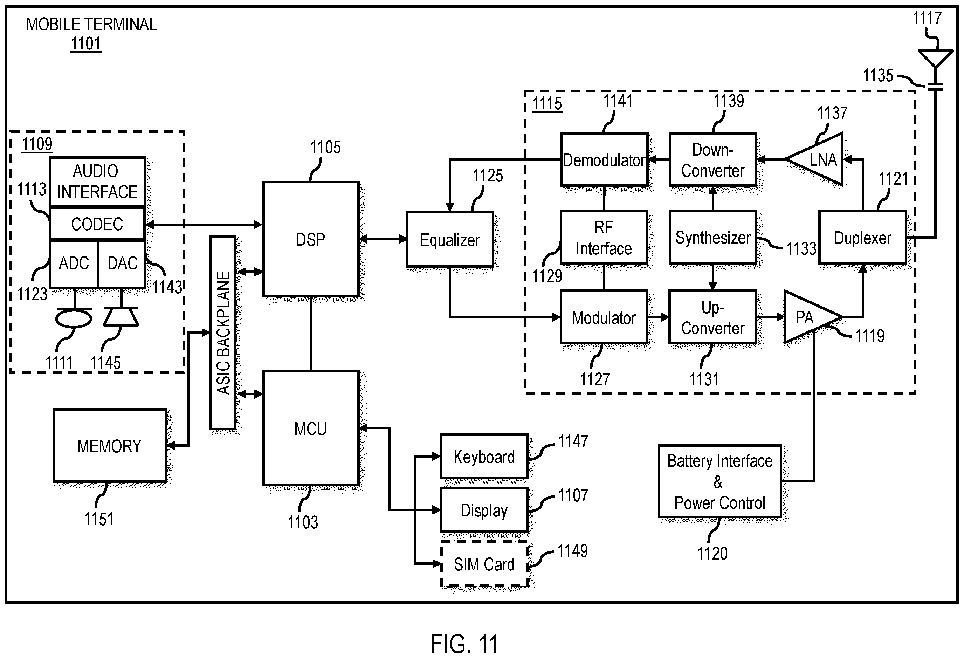

FIG. 11 is a diagram of exemplary components of a mobile terminal 1101 (e.g., a vehicle 101 and/or UE 145 or component thereof) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1103, a Digital Signal Processor (DSP) 1105, and a receiver/transmitter unit including a microphone gain control unit and a speaker gain control unit. A main display unit 1107 provides a display to the user in support of various applications and mobile station functions that offer automatic contact matching. An audio function circuitry 1109 includes a microphone 1111 and microphone amplifier that amplifies the speech signal output from the microphone 1111. The amplified speech signal output from the microphone 1111 is fed to a coder/decoder (CODEC) 1113.

A radio section 1115 amplifies power and converts frequency in order to communicate with a base station, which is included in a mobile communication system, via antenna 1117. The power amplifier (PA) 1119 and the transmitter/modulation circuitry are operationally responsive to the MCU 1103, with an output from the PA 1119 coupled to the duplexer 1121 or circulator or antenna switch, as known in the art. The PA 1119 also couples to a battery interface and power control unit 1120.

In use, a user of mobile station 1101 speaks into the microphone 1111 and his or her voice along with any detected background noise is converted into an analog voltage. The analog voltage is then converted into a digital signal through the Analog to Digital Converter (ADC) 1123. The control unit 1103 routes the digital signal into the DSP 1105 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, 5G New Radio networks, code division multiple access (CDMA), wireless fidelity (WiFi), satellite, and the like.

The encoded signals are then routed to an equalizer 1125 for compensation of any frequency-dependent impairments that occur during transmission though the air such as phase and amplitude distortion. After equalizing the bit stream, the modulator 1127 combines the signal with an RF signal generated in the RF interface 1129. The modulator 1127 generates a sine wave by way of frequency or phase modulation. In order to prepare the signal for transmission, an up-converter 1131 combines the sine wave output from the modulator 1127 with another sine wave generated by a synthesizer 1133 to achieve the desired frequency of transmission. The signal is then sent through a PA 1119 to increase the signal to an appropriate power level. In practical systems, the PA 1119 acts as a variable gain amplifier whose gain is controlled by the DSP 1105 from information received from a network base station. The signal is then filtered within the duplexer 1121 and optionally sent to an antenna coupler 1135 to match impedances to provide maximum power transfer. Finally, the signal is transmitted via antenna 1117 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1101 are received via antenna 1117 and immediately amplified by a low noise amplifier (LNA) 1137. A down-converter 1139 lowers the carrier frequency while the demodulator 1141 strips away the RF leaving only a digital bit stream. The signal then goes through the equalizer 1125 and is processed by the DSP 1105. A Digital to Analog Converter (DAC) 1143 converts the signal and the resulting output is transmitted to the user through the speaker 1145, all under control of a Main Control Unit (MCU) 1103-which can be implemented as a Central Processing Unit (CPU) (not shown).

The MCU 1103 receives various signals including input signals from the keyboard 1147. The keyboard 1147 and/or the MCU 1103 in combination with other user input components (e.g., the microphone 1111) comprise a user interface circuitry for managing user input. The MCU 1103 runs a user interface software to facilitate user control of at least some functions of the mobile station 1101 to provide ETA scorecard creation. The MCU 1103 also delivers a display command and a switch command to the display 1107 and to the speech output switching controller, respectively. Further, the MCU 1103 exchanges information with the DSP 1105 and can access an optionally incorporated SIM card 1149 and a memory 1151. In addition, the MCU 1103 executes various control functions required of the station. The DSP 1105 may, depending upon the implementation, perform any of a variety of conventional digital processing functions on the voice signals. Additionally, DSP 1105 determines the background noise level of the local environment from the signals detected by microphone 1111 and sets the gain of microphone 1111 to a level selected to compensate for the natural tendency of the user of the mobile station 1101.

The CODEC 1113 includes the ADC 1123 and DAC 1143. The memory 1151 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1151 may be, but not limited to, a single memory, CD, DVD, ROM, RAM, EEPROM, optical storage, or any other non-volatile or non-transitory storage medium capable of storing digital data.

An optionally incorporated SIM card 1149 carries, for instance, important information, such as the cellular phone number, the carrier supplying service, subscription details, and security information. The SIM card 1149 serves primarily to identify the mobile station 1101 on a radio network. The card 1149 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

The following numbered paragraphs are also disclosed:

1. A method comprising:

computing an original estimated time of arrival (ETA) for a commercial vehicle traveling on a route for a transportation and logistics (T&L) industry trip, wherein the T&L industry trip is subject to one or more required events during the route, and wherein the original ETA is computed based on one or more pre-trip predicted events that are predicted based on an initial set of assumptions and the one or more required events;
monitoring real-time location trace data collected from one or more sensors of the commercial vehicle on the route during a monitoring period;
processing the real-time location trace data to determine one or more actual events of the commercial vehicle, the driver, or a combination occurring during the monitoring period;
generating a real-time ETA scorecard that compares the one or more actual events to the one or more required events, the one or more pre-trip predicted events, one or more prior events determined for one or more previous monitoring periods, or a combination thereof;
determining one or more predicted events for one or more subsequent monitoring periods based on the real-time ETA scorecard;
determining an updated ETA for the route based on the one or more predicted events; and
providing the updated ETA, the real-time ETA scorecard, or a combination thereof as an output.

2. The method of paragraph 1, wherein the initial set of assumptions is based, at least in part, on prior location trace data for one or more previous commercial trips made by the driver.

3. The method of paragraph 1, wherein the one or more required events include one or more rest stops.

4. The method of paragraph 3, wherein the one or more rest stops is required at a specified frequency, a specified duration, or a combination thereof; and wherein the one or more predicted events are based on the specified frequency, the specified duration, or a combination thereof.

5. The method of paragraph 1, wherein the updated ETA, the real-time ETA scorecard, or a combination thereof is iteratively updated as each of the one or more subsequent monitoring periods during the route is completed.

6. The method of paragraph 1, wherein the ETA score card is generated with respect to an expected route distance or time versus an actual route distance or time, one or more expected rest events versus one or more actual rest events, one or more expected task events versus one or more actual task events, an expected driving time versus an actual driving time, one or more expected traffic events versus one or more actual traffic events, or a combination thereof.

7. The method of paragraph 1, wherein the initial set of assumptions or the one or more pre-trip predicted events relates to driver rest, use of a single driver, adherence to regulations, a full truckload shipment, no refueling break, an optimal route, no non-T&L trip related events, or a combination thereof.

8. The method of paragraph 1, further comprising:
after a completion of the T&L industry trip, presenting a user interface depicting a chronology of the one or more actual events determined from the real-time location trace data.

9. The method of paragraph 1, further comprising:
determining one or more factors contributing to an ETA deviation between the original ETA and the updated ETA based on the ETA scorecard.

10. The method of paragraph 1, further comprising:
computing a compliance index based on an ETA deviation between the original ETA and the updated ETA, a regulatory deviation between the one or more required events and the one or more actual events, or a combination thereof.

11. The method of paragraph 10, further comprising:
transmitting an alert based on the ETA deviation, the regulatory deviation, or a combination thereof.

12. The method of paragraph 1, wherein the route is computed as a sequence of one or more driving events and one or more non-driving events.

13. An apparatus comprising:

at least one processor; and
at least one memory including computer program code for one or more programs,
the at least one memory and the computer program code configured to, with the at least one processor, cause the apparatus to perform at least the following:

compute an original estimated time of arrival (ETA) for a vehicle traveling on a route for a trip, wherein the trip is subject to one or more required events during the route, and wherein the original ETA is computed based on an initial set of assumptions relating to one or more pre-trip predicted events and the one or more required events;
monitoring real-time location trace data collected from one or more sensors of the vehicle on the route during a monitoring period;
processing the real-time location trace data to determine one or more actual events of the vehicle, the driver, or a combination occurring during the monitoring period;
generating a real-time ETA scorecard that compares the one or more actual events to the one or more required events, the one or more pre-trip predicted events, one or more prior events determined for one or more previous monitoring periods, or a combination thereof;
determining one or more predicted events for one or more subsequent monitoring periods based on the real-time ETA scorecard;
determining an updated ETA for the route based on the one or more predicted events; and
providing the updated ETA, the real-time ETA scorecard, or a combination thereof as an output.

14. The apparatus of paragraph 13, wherein the initial set of assumptions is based, at least in part, on prior location trace data for one or more previous trips made by the driver.

15. The apparatus of paragraph 13, wherein the one or more required events include one or more rest stops.

16. The apparatus of paragraph 15, wherein the one or more rest stops is required at a specified frequency, a specified duration, or a combination thereof; and wherein the one or more predicted events are based on the specified frequency, the specified duration, or a combination thereof.

17. A non-transitory computer-readable storage medium carrying one or more sequences of one or more instructions which, when executed by one or more processors, cause an apparatus to at least perform the following steps:

computing an original estimated time of arrival (ETA) for a vehicle traveling on a route for trip, wherein the trip is subject to one or more required events during the route, and wherein the original ETA is computed based on an initial set of assumptions relating to one or more pre-trip predicted events and the one or more required events;

monitoring real-time location trace data collected from one or more sensors of the vehicle on the route during a monitoring period;

processing the real-time location trace data to determine one or more actual events of the vehicle, the driver, or a combination occurring during the monitoring period;

generating a real-time ETA scorecard that compares the one or more actual events to the one or more required events, the one or more pre-trip predicted events, one or more prior events determined for one or more previous monitoring periods, or a combination thereof;

determining one or more predicted events for one or more subsequent monitoring periods based on the real-time ETA scorecard;

determining an updated ETA for the route based on the one or more predicted events; and

providing the updated ETA, the real-time ETA scorecard, or a combination thereof as an output.

18. The non-transitory computer-readable storage medium of paragraph 17, wherein the initial set of assumptions is based, at least in part, on prior location trace data for one or more previous trips made by the driver.

19. The non-transitory computer-readable storage medium of paragraph 17, wherein the one or more required events include one or more rest stops.

20. The non-transitory computer-readable storage medium of paragraph 19, wherein the one or more rest stops is required at a specified frequency, a specified duration, or a combination thereof; and wherein the one or more predicted events are based on the specified frequency, the specified duration, or a combination thereof.

**Claims**

1. A computer-implemented method comprising:

computing an original estimated time of arrival (ETA) for a commercial vehicle traveling on a route for a transportation and logistics (T&L) industry trip, wherein the T&L industry trip is subject to one or more required events during the route, and wherein the original ETA is computed based on one or more pre-trip predicted events that are predicted based on an initial set of trip context assumptions and the one or more required events;

monitoring real-time location trace data collected from one or more sensors of the commercial vehicle on the route during a monitoring period;

processing the real-time location trace data to determine one or more actual events of the commercial vehicle, a driver of the commercial vehicle, or a combination occurring during the monitoring period;

generating a real-time ETA scorecard that compares the one or more actual events to the one or more required events, the one or more pre-trip predicted events, one or more prior events determined for one or more previous monitoring periods, or a combination thereof;

determining one or more predicted events for one or more subsequent monitoring periods based on the real-time ETA scorecard;

determining an updated ETA for the route based on the one or more predicted events; and

providing the updated ETA, the real-time ETA scorecard, or a combination thereof as an output.

2. The method of claim 1, wherein the initial set of trip context assumptions is based, at least in part, on prior location trace data for one or more previous commercial trips made by the driver of the commercial vehicle.

3. The method of claim 1, wherein the one or more required events include one or more rest stops.

4. The method of claim 3, wherein the one or more rest stops is required at a specified frequency, a specified duration, or a combination thereof; and wherein the one or more predicted events are based on the specified frequency, the specified duration, or a combination thereof.

5. The method of claim 1, wherein the updated ETA, the real-time ETA scorecard, or a combination thereof is iteratively updated as each of the one or more subsequent monitoring periods during the route is completed.

6. The method of claim 1, wherein the ETA scorecard is generated with respect to an expected route distance or time versus an actual route distance or time, one or more expected rest events versus one or more actual rest events, one or more expected task events versus one or more actual task events, an expected driving time versus an actual driving time, one or more expected traffic events versus one or more actual traffic events, or a combination thereof.

7. The method of claim 1, wherein the initial set of trip context assumptions is based on driver rest, use of a single driver, adherence to regulations, a full truckload shipment, no refueling break, an optimal route, no non-T&L trip related events, or a combination thereof.

8. The method of claim 1, further comprising:
   after a completion of the T&L industry trip, presenting a user interface depicting a chronology of the one or more actual events determined from the real-time location trace data.

9. The method of claim 1, further comprising:
   determining one or more factors contributing to an ETA deviation between the original ETA and the updated ETA based on the ETA scorecard.

10. The method of claim 1, further comprising:
    computing a compliance index based on an ETA deviation between the original ETA and the updated ETA, a regulatory deviation between the one or more required events and the one or more actual events, or a combination thereof.

11. The method of claim 10, further comprising:
    transmitting an alert based on the ETA deviation, the regulatory deviation, or a combination thereof.

12. The method of claim 1, wherein the route is computed as a sequence of one or more driving events and one or more non-driving events.

13. An apparatus comprising means for performing a method according to any of claims 1 to 12.

14. A computer program product comprising instructions, which, when executed by a computer, cause the computer to perform a method according to any of claims 1 to 12.

FIG. 1

FIG. 2

FIG. 3

EP 4 600 873 A1

| INPUTS 401 | ETA SERVICE 127 | OUTPUT 403 | ROUTING ENGINE 131 |
|---|---|---|---|
| • START<br>• DESTINATION<br>• LOCATION TRACE DATA (E.G., LAT/LONG PINGS) | • EXTRACTION OF TRIP CONTEXT INCLUDING EVENT CLASSIFICATION (E.G., STOP CLASSIFICATION) | • ORIGIN<br>• DESTINATION<br>• PREVIOUS EVENTS (E.G., REST STOPS, TASKS, ETC.)<br>• NEXT PREDICTED EVENTS BASED ON PAST CONTEXT | • ROUTE<br>• TRUCK ETA INCLUDING PREDICTED REST STOPS SEQUENCE APPLIED TO CURRENT TRIP |

FIG. 4

500

COMPUTE ORIGINAL ETA FOR TRIP WITH REQUIRED EVENTS BASED ON INITIAL ASSUMPTIONS — 501

MONITOR REAL-TIME LOCATION TRACE DATA — 503

PROCESS REAL-TIME LOCATION TRACE DATA TO DETERMINE ACTUAL EVENTS — 505

GENERATE ETA SCORECARD THAT COMPARES ACTUAL EVENTS — 507

DETERMINE PREDICTED EVENTS BASED ON ETA SCORECARD — 509

DETERMINE UPDATED ETA BASED ON PREDICTED EVENTS — 511

PROVE UPDATED ETA AND/OR ETA SCORECARD AS OUTPUT — 513

FIG. 5

FIG. 6A

FIG. 6B

FIG. 6C

Legend:
- Rest time
- Task time
- Drive time

Duration calculated by reference request

**Actual Actions**

Current Context: A B C D E

ΔTasks =
Σ Previous scheduled tasks - Σ Actual tasks — 641

B
A C E
2
D
1 3

ΔDrive =
Σ Previous scheduled drive - Σ Actual drive — 643

ΔRests =
Σ Previous scheduled rests - Σ Actual rests — 645

Reference Context: 1 2 3

Scheduled Actions

Time flow

Reference ETA request instance

Current ETA request instance

ETA calculated by reference request

EP 4 600 873 A1

FIG. 6D

FIG. 7

GEOGRAPHIC DATABASE 135

GEOGRAPHIC DATA 801

NODE DATA RECORDS 803

ROAD SEGMENT DATA RECORDS 805

POI DATA RECORDS 807

ETA SCORECARD DATA RECORDS 809

HD DATA RECORDS 811

INDEXES 813

FIG. 8

FIG. 9

1000

FIG. 10

FIG. 11

EP 4 600 873 A1

## EUROPEAN SEARCH REPORT

Application Number

EP 25 15 7076

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/226862 A1 (SHAUKAT SHAZIB [US] ET AL) 25 July 2019 (2019-07-25) * paragraphs [0012] - [0014], [0037] - [0040], [0055] - paragraphs [0061] - [0070], [0083]; figures 1-4 * | 1-14 | INV. G06Q10/047 G06Q10/0833 |

TECHNICAL FIELDS
SEARCHED (IPC)

G06Q

The present search report has been drawn up for all claims

| Place of search | Date of completion of the search | Examiner |
|---|---|---|
| Munich | 1 July 2025 | Bîrlescu, V |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 7076

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | Publication date | Patent family member(s) | Publication date |
|---|---|---|---|
| US 2019226862 A1 | 25-07-2019 | NONE | |

For more details about this annex : see Official Journal of the European Patent Office, No. 12/82

**EP 4 600 873 A1**

**Patent documents cited in the description**

- US 97767922